# EUROPEAN PATENT APPLICATION

(11) **EP 4 770 067 A1**
(43) Date of publication of application: **01.07.2026**
(21) Application number: 25738498.2
(22) Date of filing: 09.01.2025
(51) Int. Cl.: H04M 1/72403

(54) **DISPLAY METHOD AND ELECTRONIC DEVICE**

(30) Priority: 10.01.2024 CN 202410045698; 10.01.2024 CN 202410045667
(71) Applicant: Honor Device Co., Ltd., Shenzhen, Guangdong 518040 (CN)
(72) Inventor: MA, Tengfei, Shenzhen, Guangdong 518040 (CN)
(74) Representative: Isarpatent
(86) International application number: PCT/CN2025/071491
(87) International publication number: WO 2025/148969

(57) **Abstract**

This application provides a display method and an electronic device, and relates to the terminal field. This application provides the display method. A first application is installed in an electronic device, and the first application inherits a low-power mode; and the method includes: The first application is started when the electronic device is in a stand mode. The first application determines, based on a service interface displayed previously on a display controlled by the first application, a target service interface to be displayed currently on the display controlled by the first application, where the service interface used when the first application runs for the first time is determined based on a service interface recommendation model. When it is detected that the electronic device is in a state of being charged, the first application in a charging period of the electronic device controls the display to display the target service interface; or when it is detected that the electronic device is not in a state of being charged, the first application controls, within first preset duration, the display to display the target service interface. According to the method in this application, when the electronic device is in the stand mode, an application interface can be displayed in a low-power state.

## Description

This application claims priorities to Chinese Patent Application No. 202410045667.7, filed with the China National Intellectual Property Administration on January 10, 2024 and entitled "DISPLAY METHOD AND ELECTRONIC DEVICE", and to Chinese Patent Application No. 202410045698.2, filed with the China National Intellectual Property Administration on January 10, 2024 and entitled "DISPLAY METHOD AND ELECTRONIC DEVICE", both of which are incorporated herein by reference in their entireties.

### TECHNICAL FIELD

This application relates to the terminal field, and in particular, to a display method and an electronic device.

### BACKGROUND

With continuous development of mobile terminal technologies, mobile terminals are increasingly widely used. When a user expects a mobile phone to display an image in a gallery in a stand mode, the user needs to adjust the mobile phone from being in a portrait mode to being in the stand mode. When the mobile phone is in the stand mode, the mobile phone starts the gallery in response to an operation of starting the gallery by the user. The gallery application displays, on a display, an image selected by the user in response to a viewing operation of the user.

However, when the mobile phone displays the image in the gallery in the stand mode, the user needs to perform a plurality of operations, and power consumption of the mobile phone is increased in a process of displaying the image. To reduce power consumption, if the mobile phone is adjusted to be in a low-power standby state, an application in the mobile phone is in a sleep state, and an interface of the application cannot be normally displayed. How to display an interface required by the user (for example, playing a video file in a video application) when the mobile phone is in a stand mode and in a low-power state is a problem that needs to be resolved.

### SUMMARY

To resolve the foregoing technical problem, this application provides a display method and an electronic device, so that when an electronic device is in a stand mode, an application interface can be normally displayed in a low-power state. This reduces power consumption of the electronic device.

According to a first aspect, this application provides a display method, applied to an electronic device. A first application is installed in the electronic device, and the first application inherits a low-power mode; and the method includes: The first application is started when the electronic device is in a stand mode. The first application determines, based on a service interface displayed previously on a display controlled by the first application, a target service interface to be displayed currently on the display controlled by the first application, where the service interface used when the first application runs for the first time is determined based on a service interface recommendation model. When it is detected that the electronic device is in a state of being charged, the first application in a charging period of the electronic device controls the display to display the target service interface; or when it is detected that the electronic device is not in a state of being charged, the first application controls, within first preset duration, the display to display the target service interface.

In this way, the first application (namely, Standby) is installed in the electronic device (for example, a mobile phone or a tablet computer). The first application inherits the low-power mode, that is, the first application has an attribute in the low-power mode. In this example, when the electronic device is in the stand mode, the first application is started, so that the electronic device is in the low-power mode, and the first application can control, under low power consumption, the display to use different display policies in different scenarios, to further reduce power consumption of the electronic device. When the first application runs for the first time, the target service interface used when the first application runs for the first time may be determined based on the service interface recommendation model. The target service interface may be an image in a gallery application, may be a video file in a video application, or may be an interface of a calendar application. This allows the electronic device to view a desired interface when the electronic device is in the stand mode without the need for a user to perform a plurality of operations. When a non-first application runs for a non-first time, the target service interface to be displayed currently on the controlled display may be determined based on a recorded service interface that exits previously. In this manner, when the electronic device is in the stand mode, the target service interface displayed on the display controlled by the first application meets a requirement of the user.

In addition, when the electronic device is in the stand mode, if the electronic device is in the state of being charged, the target service interface may be displayed continuously in the charging/discharging period. Because the electronic device has sufficient power in the state of being charged, duration for displaying the target service interface does not need to be limited. When the electronic device is not in the state of being charged, the first application may control, within first preset duration (for example, 20 seconds or 30 seconds), the display to display the target service interface. This prevents the electronic device from displaying the target service interface for long time, increasing unnecessary power consumption of the electronic device, to further reduce power consumption of the electronic device.

According to a first aspect, the first application includes: a status management module, a display module, and a timer; and when it is detected that the electronic device is not in a state of being charged, that the first application controls, within first preset duration, the display to display the target service interface includes: when it is detected that the electronic device is not in the state of being charged, the display module controls the display to display the target service interface, and starts the timer; when it is detected that the timer reaches the first preset duration, the display module transmits first indication information to the status management module; and the status management module sets, based on the first indication information, the display to switch to be in an Always On Display state. In this way, the first application may control, through the timer and the status management module, the display to enter the Always On Display state in time, and power consumption for running of the first application in the Always On Display state is reduced, thereby reducing unnecessary power consumption.

According to the first aspect, after the display switches to be in the Always On Display state, the method further includes: When detecting a first preset event, the display module transmits second indication information to the status management module, where the first preset event includes a preset touch operation or an event in which a human eye gazes at the display; the status management module sets the display to turn on a screen based on the second indication information; and the display module indicates the timer to restart timing. In this way, because the first application does not need to be exited in the Always On Display state, after the display enters the Always On Display state, the electronic device further reduces power consumption. In this example, the electronic device is allowed to respond to the preset touch operation, so that the first application can display the target service interface in time without restarting the first application, to reduce power consumption.

According to a first aspect, the method further includes: within the first preset duration, when the display module detects a first preset event, indicating the timer to restart timing, where the first preset event includes a preset touch operation or an event in which a human eye gazes at the display. In this way, if the first preset event is detected within the first preset duration, it indicates that the user is viewing the target service interface, and the timer is reset, to prolong display duration of the target service interface, thereby preventing the display from entering the Always On Display state in a process in which the user views the target service interface, and avoiding affecting use of the user.

According to a first aspect, the method further includes: within the first preset duration, when the display module detects a first preset event, increasing a timing threshold of the timer by second preset duration, where the first preset event includes a preset touch operation or an event in which a human eye gazes at the display. In this way, if the first preset event is detected within the first preset duration, it indicates that the user is viewing the target service interface, and threshold duration of the timer is increased, to prolong display duration of the target service interface, thereby preventing the display from entering the Always On Display state in a process in which the user views the target service interface, and avoiding affecting use of the user.

According to a first aspect, the electronic device includes a power manager; and the method further includes: When it is detected that the electronic device switches to be in a screen-on state, the power manager controls the first application to end running, where brightness of the display in the screen-on state is greater than brightness when the first application controls the display to display the target service interface. In this way, when the electronic device switches to be in the screen-on state (for example, when a mobile phone starts to be charged and there is a call request), the power manager exits the low-power mode. In this manner, the first application can be ended in time, thereby avoiding impact on normal functions of the electronic device, for example, affecting displaying of a charging animation and displaying of a call interface.

According to a first aspect, the method further includes: The electronic device switches to be in the screen-on state in response to an operation of connecting the electronic device to a charger or an operation of disconnecting the electronic device from the charger. In this way, when the electronic device is connected to or disconnected from the charger, the electronic device switches to be in the screen-on state, and the power manager may close the first application in time in the screen-on state.

According to a first aspect, the method further includes: The electronic device switches to be in the screen-on state in response to an operation, of pressing a power button, that is input by a user. In this way, in a running process of the first application, when the user presses the power button, the electronic device exits the low-power mode and enters the screen-on state. That is, when the user presses the power button to operate, the power manager may close the first application, to avoid impact on another operation.

According to the first aspect, when it is detected that the electronic device is in a state of being charged, before the first application in a charging period of the electronic device controls the display to display the target service interface, the method includes: The display module detects whether a first service function in the first application is started, where the first service function is used to indicate the electronic device to allow the first application to control, in the charging period, the display to display the target service interface; and the display module detects that the first service function has been started. In this way, when the first service function has been started, the display module displays the target service interface in the charging period, thereby improving duration for flexibly controlling displaying of the target service interface by the user.

According to the first aspect, before the starting the first application, the method further includes: When a system server of the electronic device detects that the electronic device is in the stand mode, the system server detects whether a status value of the electronic device is a first value, where the status value is used to indicate whether the electronic device meets a condition for allowing to start the first application; and when the system server detects that the status value is the first value, transmits third indication information to the power manager of the electronic device, to indicate the power manager to start the first application; and
the starting the first application includes: the power manager starts the first application based on the third indication information. In this way, when detecting that the electronic device is in the stand mode, the system server triggers detection of whether the status value is the first value, and starts the first application in time.

According to a first aspect, the method further includes: The system server is registered when the electronic device is powered on; the system server monitors a status of each to-be-monitored item; and the system server determines the status value of the electronic device based on the status of each to-be-monitored item, and stores the status value. In this way, the system server is registered when the electronic device is powered on, so that the system server can monitor each to-be-monitored item in real time, and update the status value of the electronic device in time.

According to the first aspect, the starting the first application includes: when the power manager detects that the electronic device switches to be in a screen-off state, detecting whether the status value of the electronic device is the first value; and starting the first application when the power manager detects that the status value of the electronic device is the first value. In this way, when the electronic device switches to be in the screen-off state, the power manager queries the status value of the electronic device in time, so that the first application can be started in time.

According to a first aspect, the method further includes: The system server obtains a preset monitoring item; the system server obtains a service item supported by the electronic device; and the system server obtains an intersection item between the preset monitoring item and the service item supported by the electronic device, and uses the intersection item as the to-be-monitored item. In this way, a problem that the electronic device does not support some preset monitoring items and that the status value is inaccurate is avoided.

According to the first aspect, the preset monitoring item includes: whether an account for logging in to the electronic device is an account of a primary user, whether the electronic device allows the first application to run, whether the electronic device disables a service at a privacy moment, whether the electronic device is in the stand mode, whether the electronic device is in an unlocked state, whether the electronic device is not in a call state, whether the electronic device is not remotely locked, whether the electronic device is not in a setup wizard state, whether the electronic device is not in a leather case mode, whether the electronic device is not in a virtual reality VR mode, and whether the electronic device is not in a power-saving mode.

According to the first aspect, if the service item supported by the electronic device includes the preset monitoring item, that the system server determines the status value of the electronic device based on the status of each to-be-monitored item includes: when the system server detects that the account for logging in to the electronic device is the account of the primary user, the electronic device allows the first application to run, the electronic device disables the service at the privacy moment, the electronic device is in the stand mode, the electronic device is in the unlocked state, the electronic device is not in the call state, the electronic device is not remotely locked, the electronic device is not in the setup wizard state, the electronic device is not in the leather case mode, the electronic device is not in the VR mode, and the electronic device is not in the power-saving mode, determining that the status value of the electronic device is the first value.

According to the first aspect, when it is detected that the electronic device is not in the state of being charged, that the display module controls the display to display the target service interface includes: When the first application is started, first information of the electronic device is sent to an image composer of the electronic device, where the first information includes fourth indication information and first identification information of the first application, and the fourth indication information is used to indicate the image composer to obtain a first display policy; the image composer determines, based on the first information, that the image composer uses the first display policy; when receiving a to-be-displayed first image, the image composer detects, according to the first display policy, whether the first image belongs to an image sent by the first application; and when detecting that the first image belongs to the image sent by the first application, the image composer transmits the first image to the display, so that the display displays the first image; or when detecting that the first image does not belong to the image sent by the first application, the image composer filters the first image.

In this way, when receiving the fourth indication information, the image composer may determine that the image composer needs to filter the received image, and a filtering policy is the first display policy (that is, the image sent by the first application is allowed to be displayed, and an image sent by another application is filtered out). When receiving the image, the image composer may filter out, according to the first display policy, the image sent by the another application, and transmit only the image sent by the first application to the display. In a process of starting the first application, if the image composer first receives the image sent by the another application, because the first display policy is used, the image composer filters out the image sent by the another application, thereby ensuring that the display does not display the image sent by the another application, and avoiding a splash-screen problem of the display. In addition, when the first application is started, the first display policy is used, so that the image displayed by the first application may be decoupled from an always-on display (application).

According to the first aspect, that the image composer determines, based on the first information, that the image composer uses the first display policy includes: The image composer obtains a first preset list based on the fourth indication information; and the image composer adds the first identification information to the first preset list, where the first display policy is used to indicate the image composer to allow an image belonging to the first preset list to be transmitted to the display. In this way, the electronic device adds the first identification information to the first preset list, so that the image composer can accurately determine, based on a label in the received image and the first preset list, the image that is allowed to be displayed.

According to the first aspect, that the image composer detects, according to the first display policy, whether the first image belongs to an image sent by the first application includes: The image composer obtains an image label of the first image as a first label, where the first label is identification information of an application that generates the first image; the image composer detects whether there is identification information that is the same as the first label in the first preset list; and when detecting that there is the identification information that is the same as the first label in the first preset list, the image composer determines that the first image belongs to the image sent by the first application; or when detecting that there is no identification information that is the same as the first label in the first preset list, the image composer determines that the first image does not belong to the image sent by the first application. In this way, the first application may mark an image label in the determined image. For example, the first application determines an interface for displaying a calendar, may obtain an image of the interface, and add a label of the first application to the image. The image composer compares the first label in the first image with the identification information in the first preset list, to quickly identify whether the first image belongs to the image sent by the first application.

According to a first aspect, the method further includes: When the first application ends running, setting information of the electronic device is obtained, where the setting information is used to indicate information about a service that is allowed to be started when the electronic device is in a low-power state; the first application sends fifth indication information to the image composer based on the setting information; the image composer obtains, based on the fifth indication information, a display policy used by the image composer; and when receiving a second image, the image composer determines, according to the currently determined display policy, whether to transmit the second image to the display. In this way, when the first application ends running, the display policy of the image composer may be determined based on the setting information of the electronic device, and the currently used first display policy is canceled in time, thereby avoiding impact on displaying of another service.

According to the first aspect, that the first application sends fifth indication information to the image composer based on the setting information includes:

The first application generates the fifth indication information when detecting that the setting information indicates that the service that is allowed to be run when the electronic device in the low-power state is a first service, where the fifth indication information indicates the image composer to use a second display policy, and the second display policy is used to indicate the image composer to send the received image to the display; and when receiving a second image, that the image composer determines, according to the currently determined display policy, whether to transmit the second image to the display includes: when receiving the second image, the image composer sends the second image to the display based on an indication of the second display policy. In this way, the first service may be a global display service in an always-on display application, and the electronic device may store information for allowing the first service to run. When the first application ends running, if it is detected that the electronic device allows the first service to run, the first application may indicate the image composer to use the second display policy, where the second display policy indicates that the image sent by the another application is allowed to be displayed, thereby avoiding a problem of a filtering error.

According to the first aspect, that the first application sends fifth indication information to the image composer based on the setting information includes:

The first application generates the fifth indication information when detecting that the setting information indicates that the service allowed to be started when the electronic device is in the low-power state is a second service, where the fifth indication information indicates the image composer to use a third display policy, and the third display policy indicates the image composer to allow an image sent by the second service to be transmitted to the display; and when receiving a second image, that the image composer determines, according to the currently determined display policy, whether to transmit the second image to the display includes: when receiving the second image, the image composer detects, according to the third display policy, whether the second image belongs to the image sent by the second service; and when detecting that the second image belongs to the image sent by the second service, the image composer transmits the second image to the display, so that the display displays the second image; or when detecting that the second image does not belong to the image sent by the second service, the image composer filters the second image. In this way, the second service may be a partial display service in the always-on display application. A policy corresponding to the partial display service is the third display policy, that is, the image composer filters out an image that does not belong to the second service and that is sent by the second service, to prevent the image sent by the another application from causing interference to the image sent by the second service.

According to the first aspect, that the first application sends fifth indication information to the image composer based on the setting information includes: The first application generates the fifth indication information when detecting that the setting information indicates the electronic device to run a screen-off service in the low-power state, where the fifth indication information indicates the image composer to use a fourth display policy, and the fourth display policy indicates the image composer to forbid transmission of the received image to the display; and when receiving a second image, that the image composer determines, according to the currently determined display policy, whether to transmit the second image to the display includes: when receiving the second image, the image composer filters the second image based on an indication of the fourth display policy. In this way, the policy corresponding to the screen-off service is the fourth display policy, that is, the image composer filters out an image sent by any application, so that the electronic device does not display the image of the another application in the screen-off state, thereby reducing power consumption of the electronic device.

According to the first aspect, the service that is allowed to be started when the electronic device is in the low-power state includes a first service, a second service, and a screen-off service; and When the first service is started, the first service controls the display to display a first preset image when the electronic device is in a screen-locked state, where brightness of the display when the first preset image is displayed is less than first brightness, and the first brightness is brightness of the display when the electronic device is in a normal running state; and when the second service is started, the second service controls, when the electronic device is in the screen-locked state, to display a second preset image in a first area of the display, where the first display area is less than an area of the display, and brightness of the display when the second preset image is displayed is less than the first brightness. In this way, power consumption for displaying images in the first service and the second service is low.

According to a second aspect, this application provides a chip system. The chip system includes a processor, configured to invoke a computer program from a memory and run the computer program, to enable an electronic device in which the chip system is installed to perform the display method corresponding to any one of the first aspect and the implementations of the first aspect.

According to a third aspect, this application provides an electronic device. The electronic device includes: one or more processors, a memory, and one or more computer programs. The one or more computer programs are stored in the memory, and when the computer program is executed by the one or more processors, the electronic device is enabled to perform the display method corresponding to any one of the first aspect and the implementations of the first aspect.

The third aspect and any implementation of the third aspect respectively correspond to the first aspect and any implementation of the first aspect. For technical effect corresponding to the third aspect and any implementation of the third aspect, refer to technical effect corresponding to the first aspect and any implementation of the first aspect. Details are not described herein again.

According to a fourth aspect, this application provides a computer-readable medium, configured to store a computer program. When the computer program is run on an electronic device, the electronic device is enabled to perform the display method corresponding to any one of the first aspect and the implementations of the first aspect.

### BRIEF DESCRIPTION OF DRAWINGS

To describe the technical solutions in embodiments of this application more clearly, the following briefly describes the accompanying drawings required for describing the embodiments of this application. Apparently, the accompanying drawings in the following descriptions show only some embodiments of this application, and a person of ordinary skill in the art may still derive other accompanying drawings from these accompanying drawings without creative efforts.
FIG. 1 is an example of a schematic diagram of a structure of an electronic device;
FIG. 2 is an example of a block diagram of a software structure of an electronic device;
FIG. 3 is an example of a schematic diagram of a setting interface of Standby;
FIG. 4A to FIG. 4D are an example of a schematic diagram of four scenarios of triggering to start Standby;
FIG. 5 is an example of a schematic diagram of displaying a target service interface on a display controlled by Standby;
FIG. 6 is an example of a schematic diagram of starting Standby by an electronic device;
FIG. 7 is an example of another schematic diagram of starting Standby by an electronic device;
FIG. 8A and FIG. 8B are an example of a flowchart of determining, by an electronic device, that the electronic device meets a requirement of allowing to start Standby;
FIG. 9 is an example of a schematic diagram of a scenario in which an electronic device starts a privacy moment;
FIG. 10A and FIG. 10B are an example of a flowchart in which Standby uses different display strategies;
FIG. 11 is an example of a diagram of a scenario in which Standby controls a display to display a target service interface;
FIG. 12 is an example of a diagram of another scenario in which Standby controls a display to display a target service interface;
FIG. 13 is an example of a diagram of another scenario in which Standby controls a display to display a target service interface;
FIG. 14 is an example of a diagram of another scenario in which Standby controls a display to display a target service interface;
FIG. 15 is an example of a diagram of another scenario in which Standby controls a display to display a target service interface;
FIG. 16 is an example of a diagram of another scenario in which Standby controls a display to display a target service interface;
FIG. 17 is an example of a diagram of another scenario in which Standby controls a display to display a target service interface;
FIG. 18 is an example of a diagram of another scenario in which Standby closes an application;
FIG. 19 is an example of a schematic diagram of a setting interface of always-on display;
FIG. 20 is an example of a schematic diagram of a splash screen of an electronic device;
FIG. 21A and FIG. 21B are an example of a flowchart of a display method;
FIG. 22 is an example of a flowchart of a display method;
FIG. 23 is an example of a schematic diagram of a layer displayed on a display; and
FIG. 24 is an example of a schematic diagram of displaying a target service interface displayed by Standby.

### DESCRIPTION OF EMBODIMENTS

The following clearly and completely describes technical solutions in embodiments of this application with reference to the accompanying drawings in the embodiments of this application. Apparently, the described embodiments are some but not all of the embodiments of this application. All other embodiments obtained by a person of ordinary skill in the art based on the embodiments of this application without creative efforts shall fall within the protection scope of this application.

The term "and/or" in this specification describes only an association relationship between associated objects and represents that three relationships may exist. For example, A and/or B may represent the following three cases: Only A exists, both A and B exist, and only B exists.

In the specification and claims in the embodiments of this application, the terms "first", "second", and the like are intended to distinguish between different objects, but are not used to describe a particular order of the objects. For example, a first target object, a second target object, and the like are used to distinguish between different target objects, but are not used to describe a particular order of the target objects.

In the embodiments of this application, the word "example", "for example", or the like is used to represent giving an example, an illustration, or a description. Any embodiment or design solution described as "example" or "for example" in embodiments of this application should not be explained as being more preferred or having more advantages than another embodiment or design solution. Exactly, use of the word "example", "for example", or the like is intended to present a related concept in a specific manner.

In the descriptions of the embodiments of this application, unless otherwise stated, "a plurality of" means two or more than two. For example, a plurality of processing units mean two or more processing units, and a plurality of systems mean two or more systems.

Before the embodiments of this application are described in detail, application scenarios in this application are first described. If a user needs to watch a movie when a mobile phone is in a stand mode, the user needs to tap an icon of a video application, and the mobile phone starts the video application in response to a tapping operation of the user. The video application plays the movie in response to tapping an icon of the to-be-watched movie by the user. The video application responds to the user tapping a landscape playing button, and the movie video is switched to be played in a landscape mode. After the movie video is switched to be played in the landscape mode, the user needs to adjust the mobile phone from a portrait mode to a stand mode, to watch the movie video. The foregoing process requires the user to perform a plurality of operations, and operation steps are complex. In addition, the mobile phone normally plays a video in the stand mode, resulting in high power consumption of the mobile phone. If the mobile phone is adjusted to a low-power state (for example, in a screen-off state), an application in the mobile phone enters a sleep state, and a display cannot normally play a video or display an interface of the application.

To reduce operation steps of the user and reduce power consumption consumed by the interface for displaying the application in the stand mode, this application provides Standby (also referred to as Standby below) application, and the Standby application inherits a Doze mode (namely, a low-power mode). An electronic device installs Standby and the electronic device may be a device such as a mobile phone or a tablet computer. After Standby is started, a service interface of a recommended application (for example, a photo in a gallery application) may be determined based on information such as a location and time of the electronic device, and a display is controlled to display the determined service interface. The electronic device determines the service interface in a plurality of manners. For example, a service interface recommendation model may be prestored in the mobile phone, input information of the service interface recommendation model may be location information, time information, and the like of the mobile phone, and output information is a to-be-recommended service interface. The model may use a deep learning network. A specific model training process is not described herein again.

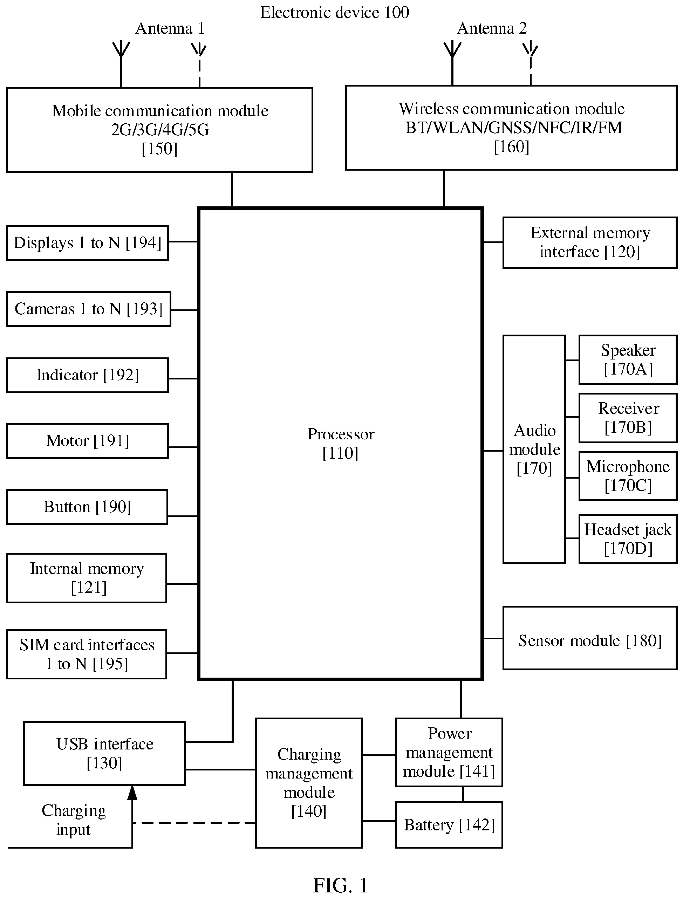

FIG. 1 is a schematic diagram of a structure of an electronic device 100 according to an embodiment of this application. It should be understood that the electronic device 100 shown in FIG. 1 is merely an example of the electronic device, and the electronic device 100 may have more or fewer components than those shown in the figure, or may combine two or more components, or may have different component configurations. The various components shown in FIG. 1 may be implemented in hardware including one or more signal processing circuits and/or application-specific integrated circuits, software, or a combination of hardware and software. In this example, the electronic device 100 being a mobile phone is used as an example.

The electronic device 100 may include a processor 110, an external memory interface 120, an internal memory 121, a universal serial bus (universal serial bus, USB) interface 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a button 190, a motor 191, an indicator 192, a camera 193, a display 194, a subscriber identity module (subscriber identification module, SIM) card interface 195, and the like. The sensor module 180 may include a pressure sensor, a gyroscope sensor, a barometric pressure sensor, a magnetic sensor, an acceleration sensor, a distance sensor, an optical proximity sensor, a fingerprint sensor, a temperature sensor, a touch sensor, an ambient light sensor, a bone conduction sensor, and the like.

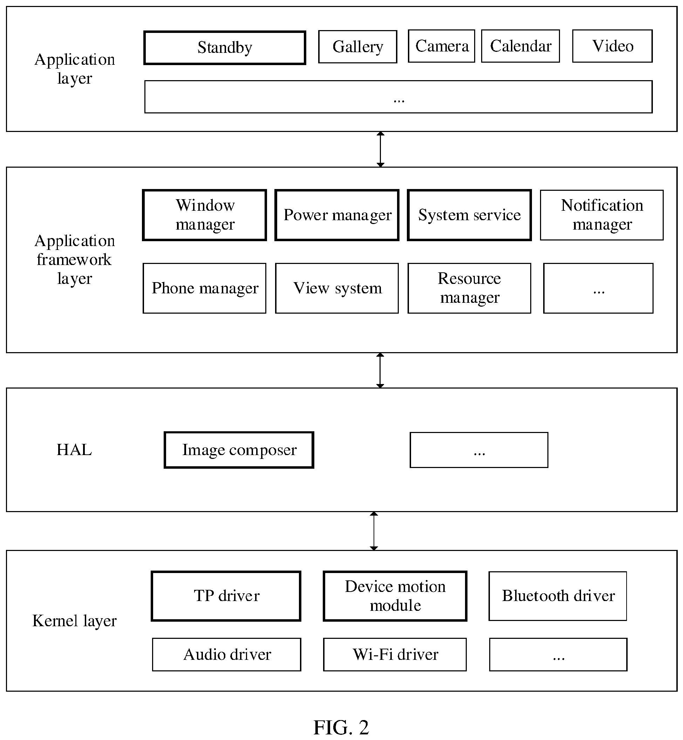

FIG. 2 is a block diagram of a software structure of an electronic device 100 according to an embodiment of this application. In a layered architecture, software is divided into several layers, and each layer has a clear role and task. The layers communicate with each other through a software interface. In some embodiments, an Android system is divided into four layers: an application layer, an application framework layer, a hardware abstraction layer (Hardware Abstraction Layer, HAL), and a kernel layer from top to bottom.

The application layer may include a series of application packages. As shown in FIG. 2, the application packages may include applications such as Standby, Camera, Gallery, Calendar, and Video.

The application framework layer provides an application programming interface (application programming interface, API) and a programming framework for an application at the application layer. The application framework layer includes some predefined functions.

As shown in FIG. 2, the application framework layer may include a window manager, a power manager, a system server, a notification manager, a phone manager, a view system, a resource manager, and the like.

The window manager is configured to manage a window application. The window manager may obtain a size of a display, determine whether there is a status bar, perform screen locking, take a screenshot, and the like. In this application, the window manager is configured to manage interface display of Standby.

The power manager is configured to manage a DreamService in a low-power mode in the Android system. For example, the power manager may control the electronic device to start the DreamService service and exit the DreamService.

The system server (SystemServer) may monitor a status of each to-be-monitored item, and determine, based on the status of each to-be-detected item, whether the electronic device meets a condition for starting Standby.

The phone manager is configured to provide a communication function for the electronic device 100, for example, management of a call status (including answering, hanging up, or the like).

The view system includes visual controls such as a control for displaying a text and a control for display an image. The view system may be configured to construct an application. A display interface may include one or more views. For example, a display interface including a messaging notification icon may include a text display view and an image display view.

The resource manager provides various resources such as a localized character string, an icon, an image, a layout file, and a video file for an application. The notification manager enables an application to display notification information in the status bar, and may be configured to transmit a notification-type message. The displayed information may automatically disappear after a short pause without user interaction. For example, the notification manager is configured to provide a notification of download completion, a message notification, and the like. The notification manager may alternatively be a notification that appears in a top status bar of a system in a form of a graph or scroll bar text, for example, a notification of an application running in the background, or a notification that appears on a screen in a form of a dialog window. For example, text information is prompted in the status bar, an alert tone is made, the electronic device vibrates, or an indicator blinks.

The HAL may include an image composer (SurfaceFlinger), and may further include a surface manager (surface manager) and a media library (Media Libraries). The SurfaceFlinger is a system server, configured to: render an image drawn by an application, and send the rendered image to the display for displaying.

The kernel layer is a layer between hardware and software. The kernel layer includes at least a TP (Touch Panel) driver, a device motion module (Device Motion), a display driver, a Bluetooth driver, an audio driver, a Wi-Fi driver, and the like.

The TP driver may provide a touch event for the electronic device under low power consumption.

The DeviceMotion may provide stand-mode algorithm logic for the electronic device. When a screen of the electronic device is a non-foldable screen, the stand mode is a state in which an included angle between a minor axis of the electronic device and a horizontal plane is between 30 degrees and 90 degrees. When a screen of the electronic device is a foldable screen, the stand mode is a form between a fully unfolded state and a folded state of the display of the electronic device.

It may be understood that the application layer, the application framework layer, the HAL, and components included in the kernel layer shown in FIG. 2 do not constitute a specific limitation on the electronic device 100. In some other embodiments of this application, the electronic device 100 may include more or fewer components than those shown in the figure, or combine some components, or split some components, or have different component arrangements.

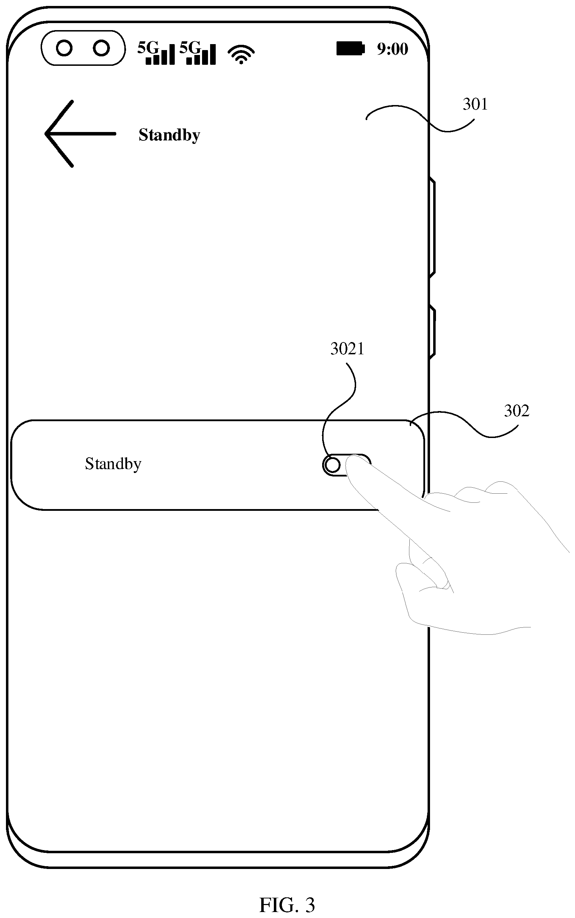

In some embodiments, Standby in the electronic device is in an off state by default. When the user needs to use the function of Standby, the user may allow the electronic device to start Standby. For example, the user may tap an option of Standby on a setting interface, and the mobile phone jumps to the setting interface of Standby in response to a tapping operation of the user. The setting interface of Standby is shown in an interface 301 in FIG. 3. The setting interface 301 of Standby includes an option 302, and the option 302 includes a switch 3021. The mobile phone responds to an operation of tapping the switch 3021 by the user, and allows the electronic device to start Standby when detecting that a condition for starting Standby is met.

When the user turns on the switch 3021 in the setting interface of Standby, the electronic device may monitor, in real time, whether the electronic device currently meets the condition for starting the smart table setting. When detecting that the electronic device currently meets the condition for starting Standby, the electronic device starts Standby.

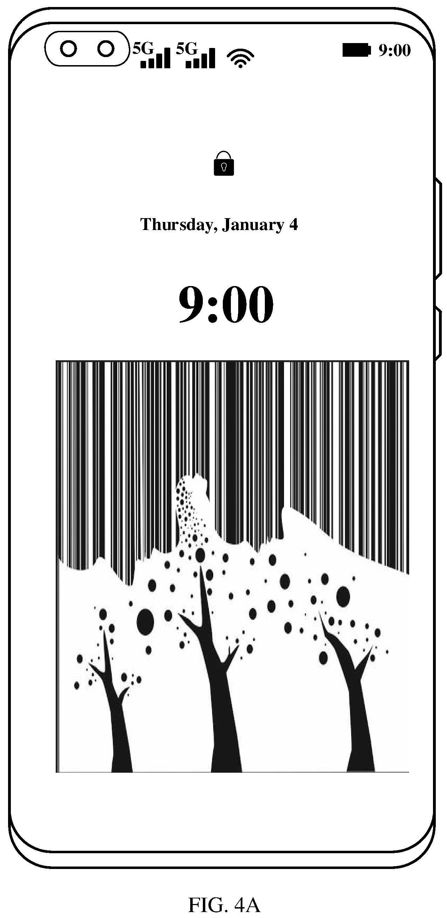

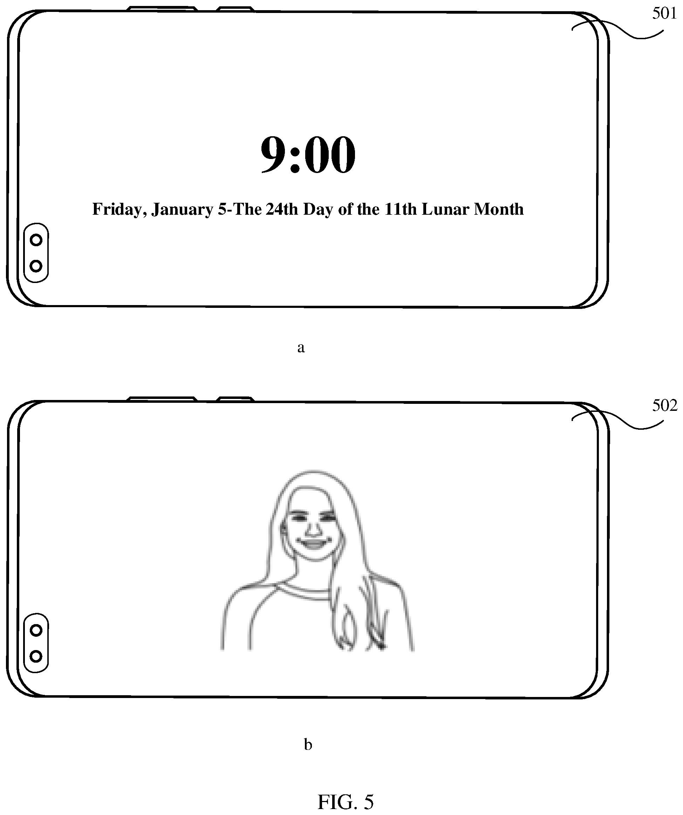

To facilitate understanding of Standby, the following specifically describes functions of Standby with reference to FIG. 4A to FIG. 4D and FIG. 5.

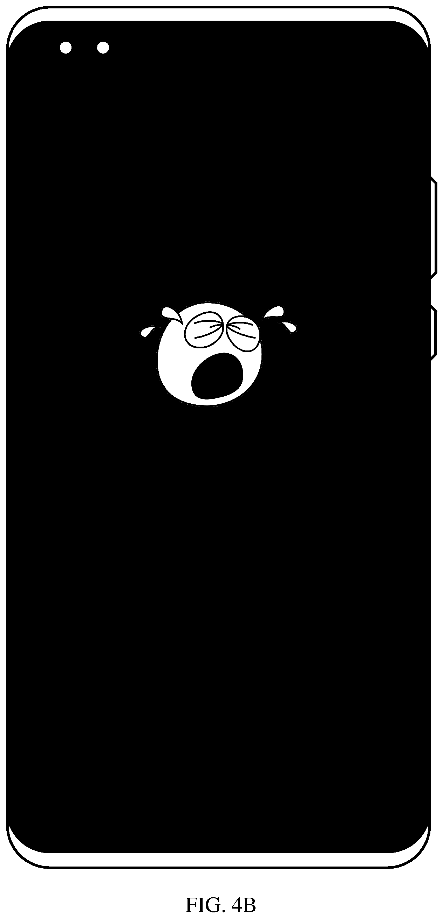

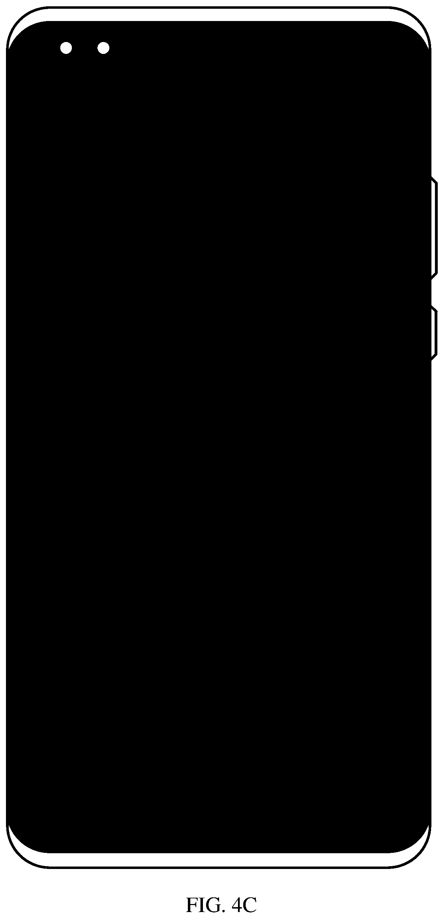

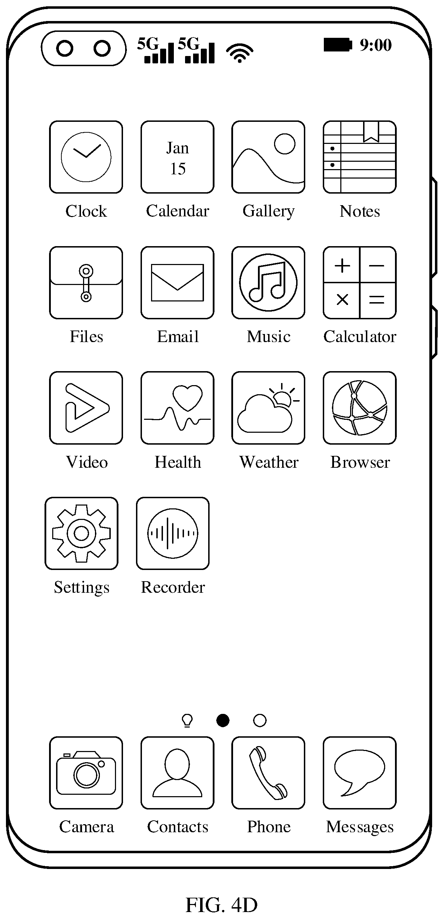

When the electronic device detects that the electronic device is in the stand mode, the electronic device may be triggered to monitor whether the condition for starting Standby is currently met. In this example, the electronic device being a mobile phone is used as an example. FIG. 4A to FIG. 4D show, for example, four scenarios when the electronic device is in a stand mode. As shown in FIG. 4A, the mobile phone is in a screen-on and screen-locked state. As shown in FIG. 4B, the mobile phone is in an always-on display (Always-On Display, AOD) state. As shown in FIG. 4C, the mobile phone is in a screen-off state. As shown in FIG. 4D, the mobile phone is in a screen-on and on-home-screen state.

When the mobile phone detects that the condition for starting Standby is met, the mobile phone starts Standby. When the mobile phone starts Standby for the first time, Standby may display recommended content on the display based on a service interface recommendation model. When the mobile phone exits Standby, the mobile phone may record information about a service interface last displayed on Standby. The information about the service interface may include identification information of an application to which the interface belongs. For example, if an interface of a calendar is last displayed on Standby, the mobile phone may record a package name of the calendar; or if a gallery is last displayed on Standby, the mobile phone may record a package name of the gallery when exiting Standby.

When the mobile phone does not start Standby for the first time, Standby may obtain information about a service interface previously displayed on Standby. Standby determines a target service interface based on the information about the service interface previously displayed, and displays the target service interface on the display. If Standby detects that the service interface previously displayed belongs to a gallery or a video application, Standby requests the user to grant an access right. After receiving the access right granted by the user, Standby may display an image in the gallery or play a video in the video application. If Standby detects that the service interface previously displayed belongs to a calendar, Standby may directly display an interface of the calendar on the display. In other words, when Standby detects that the service interface previously displayed includes privacy data of the user (for example, an album and watched video information of the user), the access right granted by the user needs to be obtained.

FIG. 5 is an example of a schematic diagram of a scenario in which Standby is displayed.

As shown in a in FIG. 5, assuming that the mobile phone starts a Standby application for the first time, Standby determines, based on a service interface recommendation model, an interface (501 in a in FIG. 5) for displaying a calendar on a display. In another example, assuming that an image in a gallery is previously displayed on Standby, Standby records information about a service interface previously displayed. The information about the service interface indicates that the image previously displayed belongs to the gallery, and the mobile phone may obtain an access right granted by the user. For example, after Standby is started, it is determined that the target service interface is an interface of the gallery. Before the access right is obtained, Standby indicates to display an image with a mask layer on the display, and queries whether the user grants the access right to the gallery. When the mobile phone receives the access right granted by the user, the image in the gallery is displayed on the display, as shown in 502 in b in FIG. 5.

Optionally, assuming that an image in a video application is previously displayed on Standby, Standby records information about the image previously displayed, the information about the image indicates that the image previously displayed belongs to the video application, and after the mobile phone obtains an access right granted by the user, the video previously watched by the user is played on the display.

Optionally, when Standby runs, because Standby inherits a Doze mode, that is, Standby runs when the mobile phone is under low power consumption, Standby controls brightness of a display interface of the display to be less than brightness of an image displayed by the mobile phone in a normal running state, to reduce power consumption.

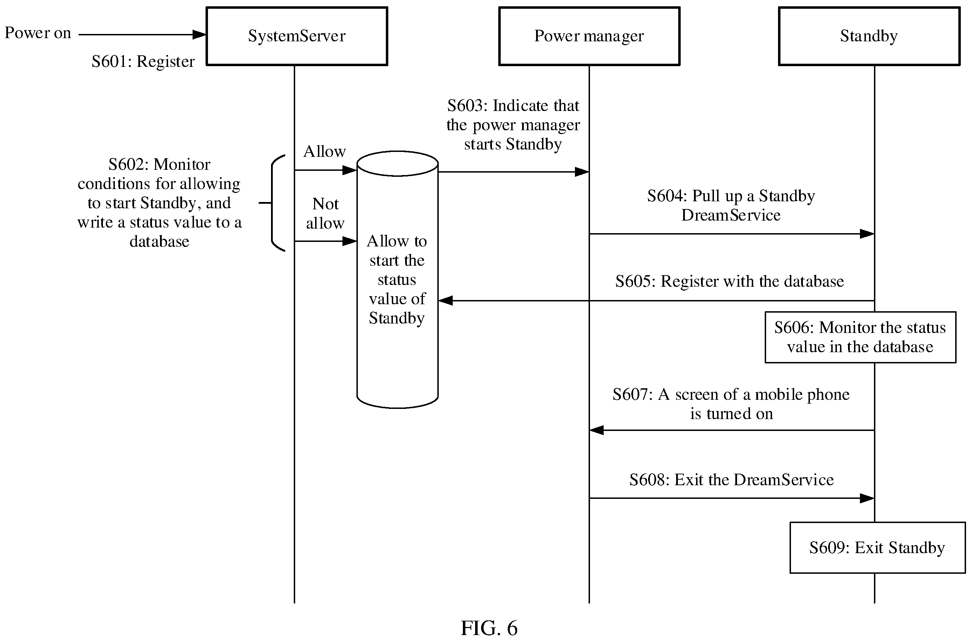

With reference to FIG. 6, the following specifically describes a process in which an electronic device starts Standby. In this example, the electronic device being a mobile phone is used as an example. A process in which the mobile phone starts Standby includes the following steps.

Step 601: When the mobile phone is powered on, the mobile phone registers with a SystemServer.

Specifically, when the mobile phone is powered on, the mobile phone may register with the system server, so that the system server may monitor a status of each to-be-monitored item in real time.

Step 602: The SystemServer monitors conditions for allowing to start Standby, and writes a status value into a database.

Specifically, each to-be-monitored item of Standby may be determined based on a function supported by the mobile phone and a preset monitoring item. The mobile phone obtains the preset monitoring item and the function supported by the mobile phone, obtains an item intersecting the preset monitoring items and the function supported by the mobile phone, and uses the intersecting item as a to-be-monitored item. For example, the preset monitoring item includes: checking whether an account for logging in to the mobile phone is an account of a primary user, whether a switch of Standby is turned on, whether the mobile phone is at a privacy moment, whether the mobile phone is in a stand mode, whether the mobile phone is not in a low battery state, whether the mobile phone is unlocked, whether the mobile phone is remotely locked, whether the mobile phone is in a setup wizard state, whether the mobile phone is in leather case mode, whether the mobile phone is not in a VR mode, and whether the mobile phone is not in a power-saving mode. If all functions supported by the mobile phone include the foregoing preset monitoring items, it is determined that the to-be-monitored item includes the foregoing 12 preset monitoring items.

For example, if the mobile phone does not support a remote locking function and does not support the VR mode, determining the to-be-monitored item includes: checking whether the account for logging in to the mobile phone is the account of the primary user, whether a switch of Standby is turned on, whether the mobile phone is at the privacy moment, whether the mobile phone is in the stand mode, whether the mobile phone is in the low battery state, whether the mobile phone is unlocked, whether the mobile phone is in the setup wizard state, whether the mobile phone is in the leather case mode, and whether the mobile phone is not in the power-saving mode.

In an example, after the mobile phone registers with the SystemServer, the SystemServer monitors the status of each to-be-monitored item in real time, and records a current status value of the electronic device. The status value is used to indicate whether the mobile phone currently meets a condition for allowing startup. For example, the status value may include "0" and "1". When the status value is "1" (namely, a first value), the status value indicates that the mobile phone currently meets the condition for allowing to start Standby. When the status value is "0" (namely, a second value), the status value indicates that the mobile phone currently does not meet the condition for allowing to start Standby.

In an example, when detecting that a status of any to-be-monitored item changes, the SystemServe updates the stored status value of the mobile phone. When the mobile phone detects that the mobile phone is in a screen-on and screen-locked state (as shown in FIG. 4A), after detecting that the mobile phone is in a stand mode, the SystemServer triggers the SystemServer to detect the status of each to-be-detected item, to determine whether the mobile phone currently meets the condition for allowing to start Standby.

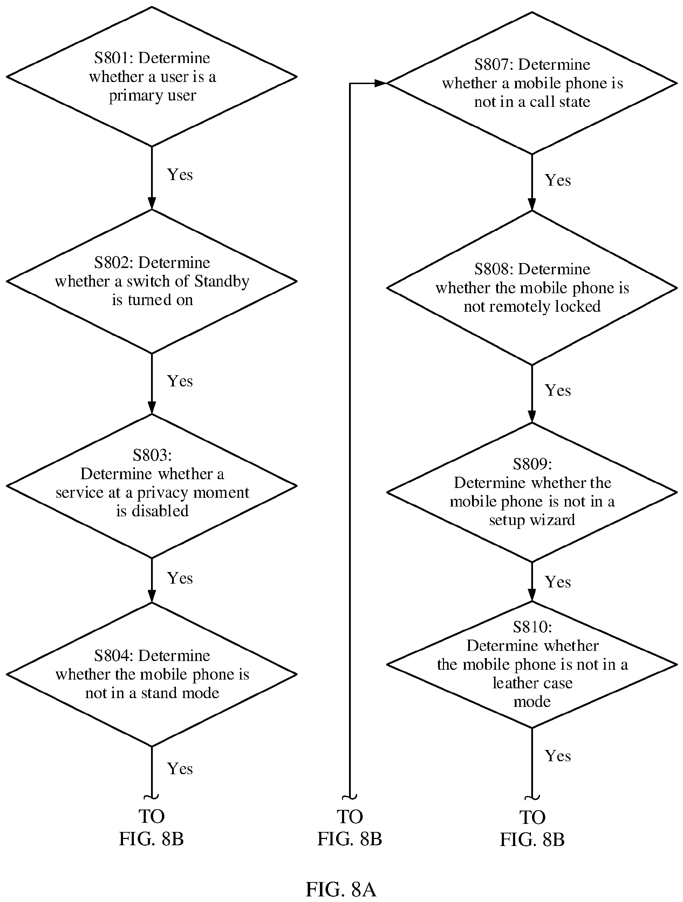

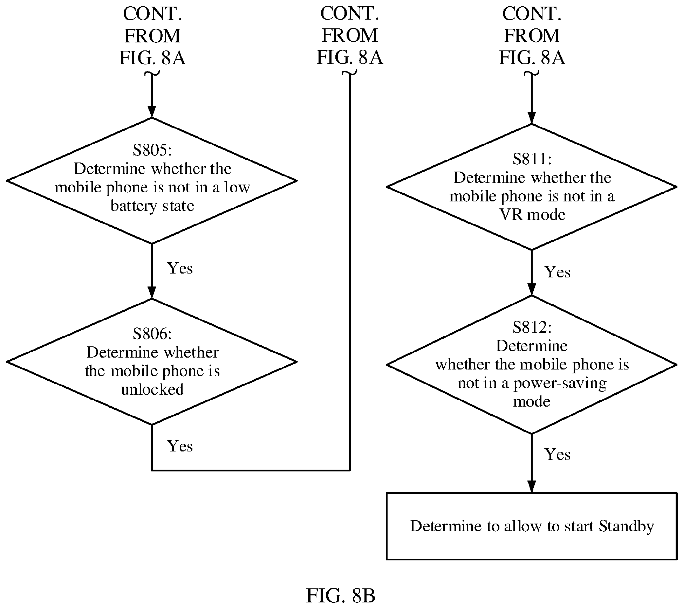

FIG. 8A and FIG. 8B are an example of a flowchart of determining, by an electronic device, that the electronic device meets a requirement of allowing to start Standby. As shown in FIG. 8A and FIG. 8B, the process includes the following steps.

Step 801: A SystemServer determines whether a user is a primary user; and if the user is the primary user, step 802 is performed; or if the user is not the primary user, the determining process ends.

Specifically, the SystemServer determines whether a login account of a mobile phone is an account of the primary user. For example, a SystemServe of an Honor mobile phone may detect whether a current login Honor account of the mobile phone is a user account (namely, the primary user) when the user registers.

If the SystemServer determines that the login account of the mobile phone is not the account of the primary user, the SystemServer may update a status value in a database to "0", to indicate that the mobile phone does not meet a condition for allowing to start Standby, and the mobile phone is not allowed to start Standby.

If the SystemServer determines that the login account of the mobile phone is not the account of the primary user, the SystemServer may continue to determine a next item. In this example, the SystemServer performs step 802.

Step 802: The SystemServer determines whether a switch of Standby is turned on; and if the switch is turned on, step 803 is performed; or if the switch is not turned on, the determining process ends.

Specifically, the SystemServer determines that the switch of Standby is turned on, that is, detects whether the electronic device allows the electronic device to start Standby when detecting that the condition for starting Standby is met. For example, the SystemServer may detect whether the switch in the interface shown in FIG. 3 is turned on; and if the SystemServer detects that the switch has been turned on, the SystemServer determines the next item; or if the SystemServer detects that the switch is not turned on, the SystemServer may update the status value in the database to "0", to indicate that the mobile phone does not meet the condition for allowing to start Standby, and Standby is not allowed to be started.

Step 803: The SystemServer determines whether a service at a privacy moment is disabled; and if the service at the privacy moment is disabled, step 804 is performed; or if the service of the privacy moment is not disabled, the determining process ends.

Specifically, the SystemServer determines whether the mobile phone disables the service at the privacy moment; and if detecting that the mobile phone disables the service at the privacy moment, the SystemServer determines the next item; or if detecting that the mobile phone starts the service at the privacy moment, the SystemServer may update the status value in the database to "0", to indicate that the mobile phone does not meet the condition for allowing to start Standby.

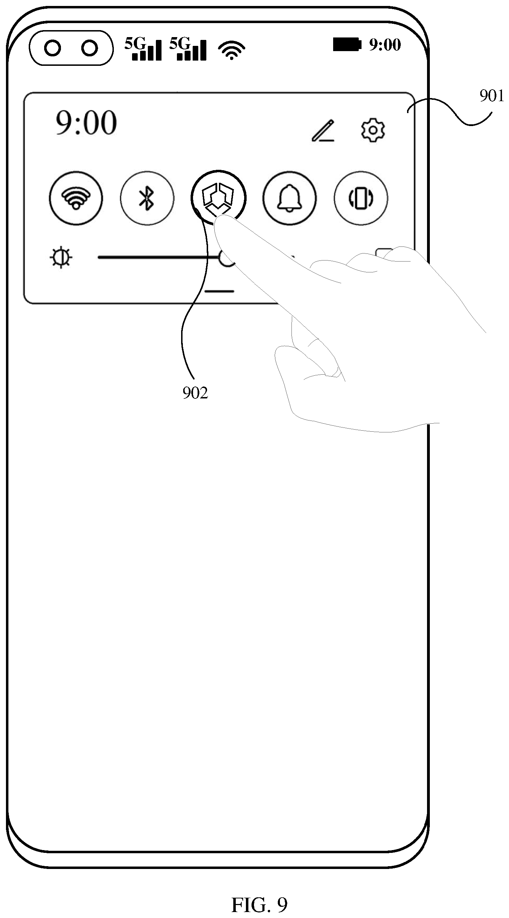

In some examples, the mobile phone has a service at a privacy moment. After the mobile phone starts the service at the privacy moment, the mobile phone forbids an application to access a microphone, forbids the application to invoke a camera function, forbids the application to obtain current geographical location information of the mobile phone, forbids the mobile phone to access a Wi-Fi network, or the like. The user may start the service at the privacy moment on a navigation bar of the mobile phone. As shown in FIG. 9, a display of the mobile phone displays a navigation bar 901. The user taps an icon 902 of the service at the privacy moment, and the mobile phone starts the service at the privacy moment of the mobile phone in response to a tapping operation of the user.

Step 804: The SystemServer determines whether the SystemServer is in a stand mode; and if the SystemServer is in the stand mode, step 805 is performed; or if the SystemServer is not in the stand mode, the determining process ends.

Specifically, the SystemServer determines whether the mobile phone is currently in the stand mode, and the SystemServer may obtain a status, of the mobile phone, detected by a DeviceMotion; and if detecting that the mobile phone is currently in the stand mode, the SystemServer determines a next item; or if detecting that the mobile phone is currently not in the stand mode, the SystemServer may update the status value in the database to "0", to indicate that the mobile phone does not meet the condition for allowing to start Standby.

In this example, the DeviceMotion may detect whether the mobile phone is in the stand mode. When the display of the mobile phone is a non-foldable screen, the DeviceMotion may detect whether an included angle between a minor axis of the mobile phone and a horizontal plane is between 30 degrees and 90 degrees; and if detecting that the included angle between the minor axis of the mobile phone and the horizontal plane is between 30 degrees and 90 degrees, the DeviceMotion may determine that the mobile phone is in the stand mode. When the display of the mobile phone is a foldable screen, the DeviceMotion may detect whether the display is in a state between a folded state and an unfolded state; and if detecting that the display is in the state between the folded state and the unfolded state, the DeviceMotion determines that the mobile phone is in the stand mode. Optionally, the DeviceMotion may further determine, by using another condition, whether the mobile phone is in the stand mode. Details are not enumerated herein.

Step 805: The SystemServer determines whether the SystemServer is not in a low-power state; and if the SystemServer is in the low-power state, step 806 is performed; or if the SystemServer is not in the low-power state, the determining process ends.

Specifically, the SystemServer may obtain a current power of the mobile phone; and when detecting that the current power of the mobile phone is greater than a preset power threshold, determine that the mobile phone is not in the low-power state. The SystemServer may continue to determine a next item. The preset power threshold may be a value less than 50%. For example, the power threshold is a value of 35%, 30%, 25%, or the like. When detecting that the current power of the mobile phone is less than or equal to the preset power threshold, the SystemServer determines that the mobile phone is currently in the low-power state, and the SystemServer may update the status value in the database to "0", to indicate that the mobile phone does not meet the condition for allowing to start Standby.

Step 806: The SystemServer determines whether the mobile phone is unlocked; and if the mobile phone is unlocked, step 807 is performed; or if the mobile phone is not unlocked, the determining process ends.

Specifically, the SystemServer obtains an unlocking state of the mobile phone. When detecting that the mobile phone has been unlocked, the SystemServer may continue to determine the next item. When detecting that the mobile phone is not unlocked, the SystemServer may update the status value in the database to "0", to indicate that the mobile phone does not meet the condition for allowing to start Standby.

Step 807: The SystemServer determines whether the mobile phone is not in a call state; and if the mobile phone is not in the call state, step 808 is performed; or if the mobile phone is in the call state, the determining process ends.

Specifically, the SystemServer obtains the call state of the mobile phone. When detecting that the mobile phone is not in the call state, the SystemServer may continue to determine the next item. When detecting that the mobile phone is in the call state, the SystemServer may update the status value in the database to "0", to indicate that the mobile phone does not meet the condition for allowing to start Standby.

Step 808: The SystemServer determines whether the mobile phone is not remotely locked; and if the mobile phone is not remotely locked, step 809 is performed; or if the mobile phone is remotely locked, the determining process ends.

Specifically, the SystemServer obtains the remote locking state. When detecting that the mobile phone is in the remote locking state, the SystemServer may update the status value in the database to "0", to indicate that the mobile phone does not meet the condition for allowing to start Standby. When detecting that the mobile phone is not in the remote locking state, the SystemServer continues to check the next item.

Step 809: The SystemServer determines whether the mobile phone is not in a setup wizard state; and if the mobile phone is not in the setup wizard state, step 810 is performed; or if the mobile phone is in the setup wizard state, the determining process ends.

Specifically, when the SystemServer detects that the mobile phone is in the setup wizard state, the SystemServer may update the status value in the database to "0", to indicate that the mobile phone does not meet the condition for allowing to start Standby. When detecting that the mobile phone is not in the setup wizard state, the SystemServer continues to check the next item.

Step 810: The SystemServer determines whether the mobile phone is not in a leather case mode; and if the mobile phone is not in the leather case mode, step 810 is performed; or if the mobile phone is in the leather case mode, the determining process ends.

Specifically, when the SystemServer detects that the mobile phone is in the leather case mode, the SystemServer may update the status value in the database to "0", to indicate that the mobile phone does not meet the condition for allowing to start Standby. When detecting that the mobile phone is not in the leather case mode, the SystemServer continues to check the next item. In the leather case mode, after the mobile phone is installed with a leather case, the mobile phone may display information based on the leather case.

Step 811: The SystemServer determines whether the mobile phone is not in a VR mode; and if the mobile phone is not in the VR mode, step 812 is performed; or if the mobile phone is in the VR mode, the determining process ends.

Specifically, when the SystemServer detects that the mobile phone is in the VR mode, the SystemServer may update the status value in the database to "0", to indicate that the mobile phone does not meet the condition for allowing to start Standby. When detecting that the mobile phone is not in the VR mode, the SystemServer continues to check the next item.

Step 812: The SystemServer determines whether the mobile phone is not in a power-saving mode; and if the mobile phone is not in the power-saving mode, determines that the mobile phone currently meets the condition for allowing to start Standby; or if the mobile phone is in the power-saving mode, the determining process ends.

Specifically, when the SystemServer detects that the mobile phone is in the power-saving mode, the SystemServer may update the status value in the database to "0", to indicate that the mobile phone does not meet the condition for allowing to start Standby. When detecting that the mobile phone is not in the power-saving mode, the SystemServer may update the status value in the database to "1", to indicate that the mobile phone currently meets the condition for allowing to start Standby.

It should be noted that, after obtaining the to-be-monitored items of the mobile phone, the SystemServer determines that sequences of the to-be-monitored items may be different. When detecting that all items shown in FIG. 8A and FIG. 8B meet the condition, the SystemServer determines that the mobile phone meets the condition for allowing to start Standby.

In addition, when the SystemServer triggers the SystemServer to detect the status of each to-be-detected item after detecting that the mobile phone is in the stand mode, the SystemServer may sequentially determine 12 items in the determining manners shown in FIG. 8A and FIG. 8B, to prevent the mobile phone from changing from the stand mode to another state (for example, a portrait mode) in the determining process.

Step 603: When detecting that the status value indicates to start Standby, the SystemServer indicates the power manager to start Standby.

Specifically, when detecting that the mobile phone is in the stand mode, the SystemServer is triggered to detect whether the status value in the database is the first value. When detecting that the status value in the database is the first value, the SystemServer may indicate the power manager to start Standby. The first value is used to indicate that the mobile phone meets the condition for allowing to start Standby, and the second value is used to indicate that the mobile phone does not meet the condition for starting Standby. For example, when detecting that the status value in the database is updated from "0" to "1", the SystemServer indicates the power manager to start Standby.

Step 604: The power manager starts the DreamService in Standby.

Specifically, Standby is the application inherited from the Doze mode. The Doze mode has the DreamService. The DreamService is used to display specific content when the mobile phone is in an idle state, a state of being charged, or a screen-locked state. Therefore, in this example, a process in which the power manager starts Standby may be understood as that the power manager starts the DreamService of Standby.

Step 605: Register with the database after Standby is started.

Specifically, after the power manager starts Standby, Standby may register with the database, to monitor a change of the status value stored in the database.

Step 606: Standby monitors the status value in the database.

Specifically, after Standby registers with the database, the change of the status value in the database may be monitored in real time. When Standby detects that the status value in the database changes from the first value to the second value, step 607 may be performed.

It should be noted that, after Standby is started, information about a service interface previously displayed by Standby may be further obtained. Standby determines a target service interface based on the information about the service interface previously displayed, and displays the target service interface on the display. For a process of determining the target service interface by Standby, refer to related descriptions in FIG. 5. Details are not described herein again.

Step 607: Control the display to switch to be in a screen-on state when Standby detects that the status value indicates to exit Standby.

Specifically, when detecting that the status value is updated to the second value, Standby controls the electronic device to switch to be in the screen-on state. In this example, the screen-on state is a state in which the display of the mobile phone displays the interface in a normal mode.

Step 608: The power manager detects that the display is in the screen-on state and exits the DreamService.

Specifically, when detecting that the display is in the screen-on state, the power manager exits a Doze state, that is, exits Standby DreamService.

Step 609: Standby ends running.

Specifically, the power manager exits Standby DreamService, that is, controls Standby to end running.

In some embodiments, if the user performs a screen-off operation or the mobile phone is screen-off due to timeout, the mobile phone switches to be in a screen-off state. After detecting that the mobile phone switches to be in the screen-off state, the power manager may trigger the power manager to obtain the status value from the database, to determine whether to start Standby. Screen-off due to timeout indicates the mobile phone to switch to be in the screen-off state after detecting that there is no touch operation within third preset duration.

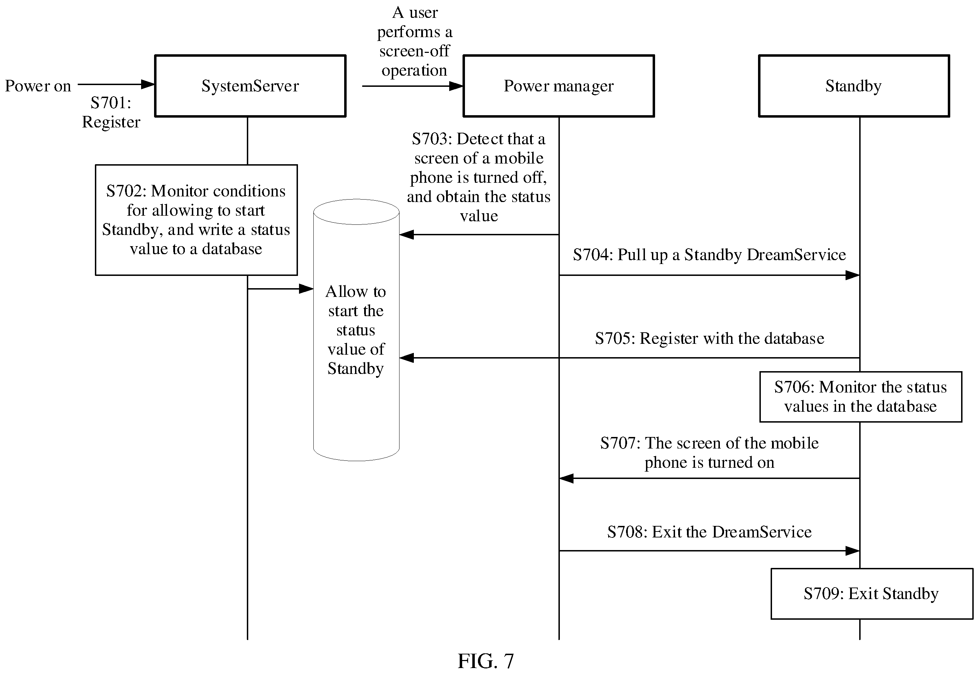

FIG. 7 specifically describes a process of triggering, by a power manager, to start Standby, and the process includes the following steps.

Step 701: When a mobile phone is powered on, the mobile phone registers with a SystemServer.

Step 702: The SystemServer monitors conditions for allowing to start Standby, and writes a status value into a database.

For a process of step 701 and step 702, refer to related descriptions in step 601 and step 602. Details are not described herein again.

Step 703: When a user performs a screen-off operation, the power manager detects that a screen of the mobile phone is turned off, and obtains the status value from the database.

Specifically, the mobile phone responds to the screen-off operation of the user (for example, an operation of pressing a power button), the mobile phone performs a screen-off operation, and the mobile phone is in a screen-off state. Optionally, when the mobile phone detects that there is no user operation within third preset duration (for example, 30 seconds, 1 minute, and 5 minutes), the screen-off operation is performed, and the mobile phone is in the screen-off state. When detecting that the mobile phone is in the screen-off state, the power manager obtains the status value of the mobile phone from the database.

Step 704: When detecting that the status value indicates to start Standby, the power manager starts a DreamService in Standby.

Specifically, when detecting that the status value (for example, the status value is "1") indicates to start Standby, the power manager starts Standby.

If the power manager detects that the status value is "0", an image may be displayed according to an AOD display policy or a wallpaper display policy. In other words, when the power manager detects that the mobile phone switches to be in the screen-off state, the power manager preferentially determines whether the condition for starting Standby is met.

Step 705: Register with the database after Standby is started.

Step 706: Standby monitors the status value in the database.

Step 707: Control a display to switch to be in a screen-on state when Standby detects that the status value indicates to exit Standby.

Step 708: The power manager detects that the display is in the screen-on state and exits the DreamService.

Step 709: Standby ends running.

For the foregoing process of step 705 and step 709, refer to related descriptions in step 605 and step 609. Details are not described herein again.

FIG. 6 and FIG. 7 specifically describe two processes of triggering the mobile phone to start Standby.

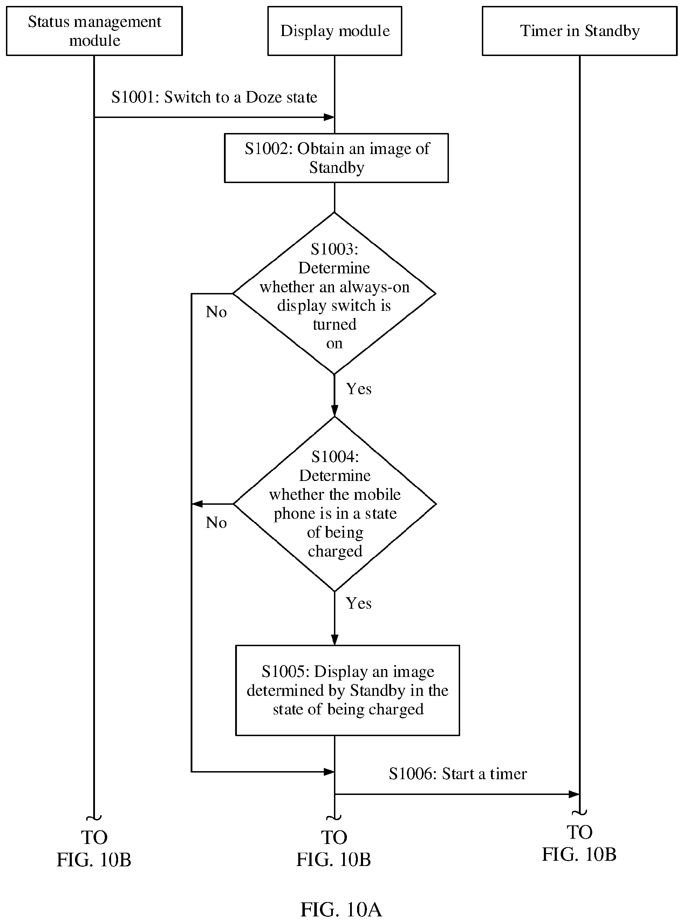

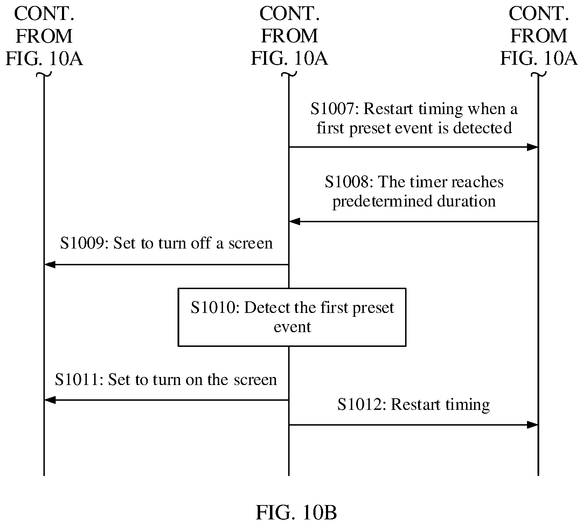

The following describes, with reference to FIG. 10A and FIG. 10B, that Standby uses different display policies to display a target service interface in different scenarios.

As shown in FIG. 10A and FIG. 10B, Standby includes a status management module, a display module, and a timer. The status management module is configured to manage a screen to be turned on and off of the mobile phone when Standby is started. In this example, the status management module may turn on or off the screen by inheriting a DreamService in a Doze state.

Step 1001: The status management module switches to be in the Doze state.

Specifically, because Standby inherits the Doze mode in Android, when Standby is started, the status management module switches to be in the Doze state. After the status management module switches to be in the Doze state, the status management module indicates the display module to enter a low-power state.

Step 1002: The display module obtains an image of Standby.

Specifically, after receiving an indication of the status management module, the display module obtains a to-be-displayed target image. The display module may obtain information about a service interface previously displayed by Standby. The display module determines the target service interface based on the information about the service interface previously displayed. For a process of determining the target service interface by the display module, refer to related descriptions in FIG. 5. Details are not described herein again.

Step 1003: The display module determines whether an always-on display switch is turned on; and if it is detected that the always-on display switch is turned on, step 1004 is performed; or if it is detected that the always-on display switch is not turned on, step 1006 is performed.

Specifically, an application interface of Standby may include the always-on display switch (namely, a switch of the first service function). When the always-on display switch is turned on, the always-on display switch is used to indicate that when the mobile phone is in a state of being charged, and the display module is allowed to control, in a charging period, the display to always display the target service interface; or when the always-on display switch is turned off, the always-on display switch is used to indicate that when the mobile phone is in the state of being charged, and the display module is not allowed to control, in the charging period, the display to always display the target service interface.

In this example, when it is detected that the always-on display switch is turned on, it may continue to determine whether the mobile phone is in the state of being charged; or when it is detected that the always-on display switch is turned off, step 1006 may be performed.

Step 1004: The display module determines whether the mobile phone is in the state of being charged; and if it is detected that the mobile phone is in the state of being charged, step 1005 may be performed; or if it is detected that the mobile phone is not in the state of being charged, step 1006 is performed.

Specifically, when the display module detects that the always-on display switch is turned on in the state of being charged, the display module controls, in the charging period, the display to always display the target service interface. When the display module of Standby responds to an operation of turning off the always-on display switch by the user or detects that the mobile phone is not in the state of being charged, the display module may perform step 1006.

Step 1005: The display module displays, in the state of being charged, the image determined by Standby.

Specifically, when the mobile phone is in the state of being charged and the always-on display switch is turned on, the display controls, in the charging period, the display to display the target service interface.

Step 1006: The display module starts the timer.

Specifically, when the display module detects that the always-on display switch of Standby is not turned on or the mobile phone is not in the state of being charged, the display module may display the target image, and indicate the timer to start timing. A timing threshold of the timer may be first preset duration. For example, the first preset duration is 20 seconds, 25 seconds, 30 seconds, and the like. Optionally, the first preset duration may alternatively be specified by the user. In this example, the first preset duration being 20 seconds is used as an example.

Step 1007: The display module restarts timing when detecting a first preset event.

Specifically, within the first preset duration, if the display module detects the first preset event, the display module indicates the timer to restart timing. The first preset event may be a preset touch operation, for example, a tapping operation on the screen, a sliding operation on the screen (for example, a quickly sliding operation, an upward sliding operation, and a downward sliding operation), and a dragging operation. The first preset event may alternatively be an event in which a human eye gazes at the screen. A human eye gaze detection module is disposed in the mobile phone, and the human eye gaze detection module may identify a human eye iris, and determine, based on a distance between the human eye iris and the screen and whether a distance between the human eye and the screen becomes smaller, whether the human eye gazes at the screen. For example, when the human eye gaze detection module detects that the distance between the human eye iris and the screen of the mobile phone is less than 80 cm, and the distance between the human eye and the screen becomes smaller, the human eye gaze detection module determines that there is the event in which the human eye gazes at the screen. The human eye gaze detection module may record a detection result, for example, "eye_event=true" is used to identify that there is currently the event in which the human eye gazes at the screen. The display module may monitor the recorded human eye gaze result; and when detecting that the human eye gaze result indicates that there is the event in which the human eye gazes at the screen, the display module indicates the timer to restart 20-second timing.

Optionally, within the first preset duration, if the display module detects the first preset event, the current timing threshold of the current timer may be adjusted, to prolong current duration in which the display displays the target service interface. For example, the display module indicates to update the current timing threshold of the timer from the first preset duration (for example, 20 seconds) to second preset duration (for example, 25 seconds).

Step 1008: When the timer reaches the timing threshold, send prompt information to the display module.

Specifically, after the timer reaches the timing threshold (for example, 20 seconds) currently set, the prompt information may be sent to the display module.

Step 1009: The display module receives the prompt information indicating that the timer reaches preset duration, and indicates the status management module to set to turn off the screen, and the status management module performs an always-on operation.

Specifically, when the display module receives the prompt information of the timer, it indicates that the display module does not receive the first preset event within the first preset duration. To reduce power consumption of the mobile phone, after receiving the prompt information of the timer, the display module may indicate the status management module to set to turn off the screen. After receiving the indication, the status management module performs the always-on operation.

Step 1010: The display module monitors the first preset event after the screen of the mobile phone is turn off.

Specifically, after the screen of the mobile phone is turn off, the display module may monitor the first preset event, and turn on the screen in time.

Step 1011: After detecting the first preset event, the display module indicates the status management module to turn on the screen.

Specifically, the status management module turns on the display based on the indication.

Step 1012: The display module indicates the timer to restart timing after the screen is turned on again.

Specifically, the display module turns on the display again, so that the user can continue to view the target image, and at the same time, indicate the timer to restart 20-second timing.

In some embodiments, FIG. 10A and FIG. 10B specifically describe different display policies of Standby. When the mobile phone is in the state of being charged and a switch in Standby is turned on, the display is controlled, in the charging period, to always display the target service interface.

When the mobile phone is not in the state of being charged or the switch in Standby is not turned on, there are three display policies. When the mobile phone is not in the state of being charged or the switch in Standby is not turned on, the display starts to display the target service interface, and indicates the timer to start 20-second timing. When the 20-second timing ends, and the display module does not detect the first preset event, the display module indicates the status management module to perform the always-on operation. In the 20-second timing process, when the first preset event is detected, the timer is indicated to restart 20-second timing or extend timing. After the status management module controls the display to be turned off, if the first preset event is detected, the status management module may indicate the status management module to turn on the display again, and indicate the timer to restart timing.

It should be noted that, in a process of running Standby by the mobile phone, when the power manager detects that the display switches to be in the screen-on state, the power manager exits the Doze state, and further ends running of Standby. The screen-on state is a state of the screen when the mobile phone runs normally after being unlocked.

The following specifically describes, with reference to the accompanying drawings, the process of displaying the target service interface in Standby in different scenarios.

It is assumed that the following scenarios all meet the condition for starting Standby.

### Scenario 1:

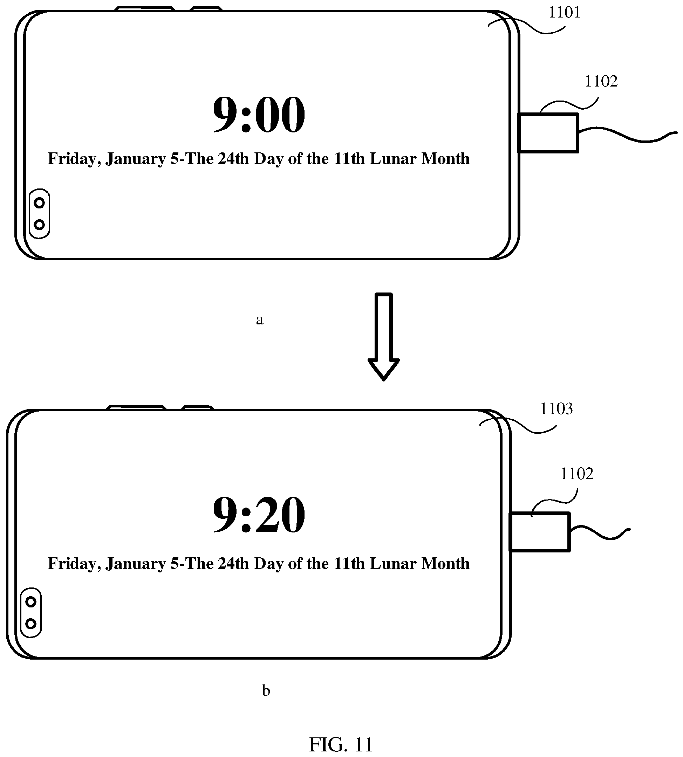

It is assumed that the always-on display switch of Standby is turned on and the mobile phone is in the state of being charged. As shown in a in FIG. 11, the mobile phone has been connected to a charging cable 1102. When the display module has detected that the always-on display switch of Standby has been turned on and detects that the mobile phone is in the state of being charged, the display module may indicate a display 1101 to display the target service interface (the target service interface is a calendar). When the mobile phone is always in the state of being charged between 9:00 and 9:20, and the state of the always-on display switch does not change, in the time period of 9:00 to 9:20, as shown in b in FIG. 11, a display 1103 of the mobile phone always displays an interface of the calendar.

### Scenario 2:

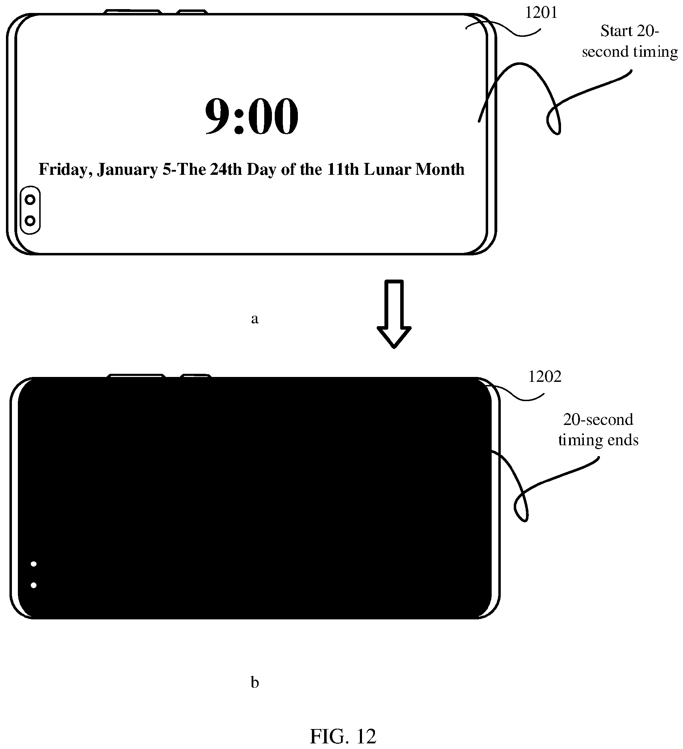

It is assumed that the mobile phone is not in the state of being charged and the target image is a calendar. As shown in a in FIG. 12, when the display module detects that the mobile phone is not in the state of being charged, a display 1201 of the mobile phone starts to display the target service interface. When the display starts to display the target service interface, the display module indicates the timer to start 20-second timing.

In a time period of 20 seconds after the timer is started, the display module does not detect a preset touch operation or an event in which a human eye gazes at the screen, and the display module indicates the status management module to turn off the display. As shown in b in FIG. 12, a display 1202 is in an Always On Display state. It should be noted that, in the Always On Display state, the mobile phone does not exit Standby, and only turns off the display.

### Scenario 3:

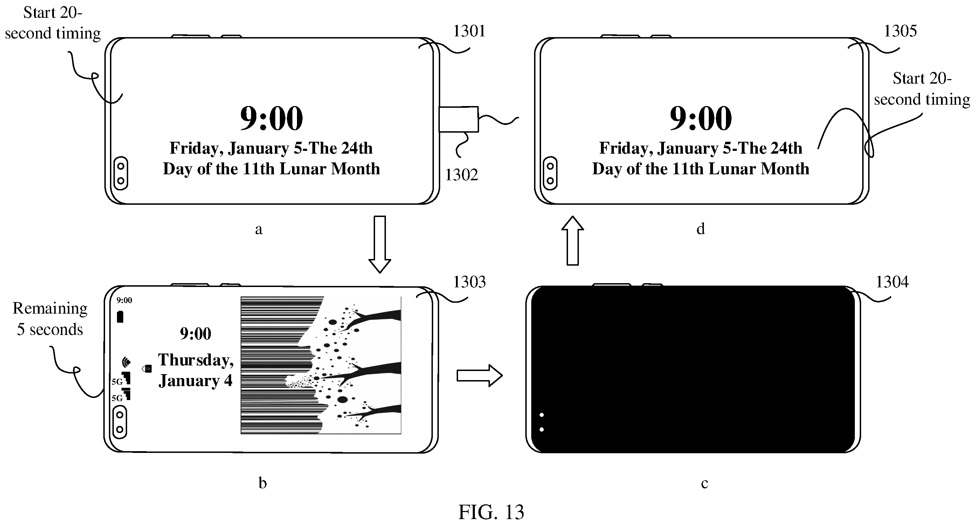

As shown in a in FIG. 13, the mobile phone has been connected to a charging cable 1302. When the display module has detected that the always-on display switch of Standby has been turned on and detects that the mobile phone is in the state of being charged, the display module may indicate a display 1301 to display the target service interface. When the user disconnects the charging cable 1302 from the mobile phone, a display 1303 of the mobile phone switches to be in a screen-on state, as shown in b in FIG. 13. When the power manager of the mobile phone detects that the display switches to be in the screen-on state, the power manager controls the mobile phone to exit the Doze state, and further enables the mobile phone to exit Standby. After the display switches to be in the screen-on state, and the mobile phone does not receive a touch operation of the user within third preset duration (for example, 10 seconds or 30 seconds), the mobile phone performs the screen-off operation. As shown in c in FIG. 13, a display 1304 of the mobile phone is in a screen-off state.

The power manager obtains a status value from a database when detecting that the display switches to be in the screen-off state. When the power manager detects that the status value indicates that the mobile phone currently meets the condition for starting Standby, the power manager starts Standby. Standby detects that the mobile phone currently is not in the state of being charged. As shown in d in FIG. 13, a display 1305 starts the target service interface, and starts 20-second timing.

### Scenario 4:

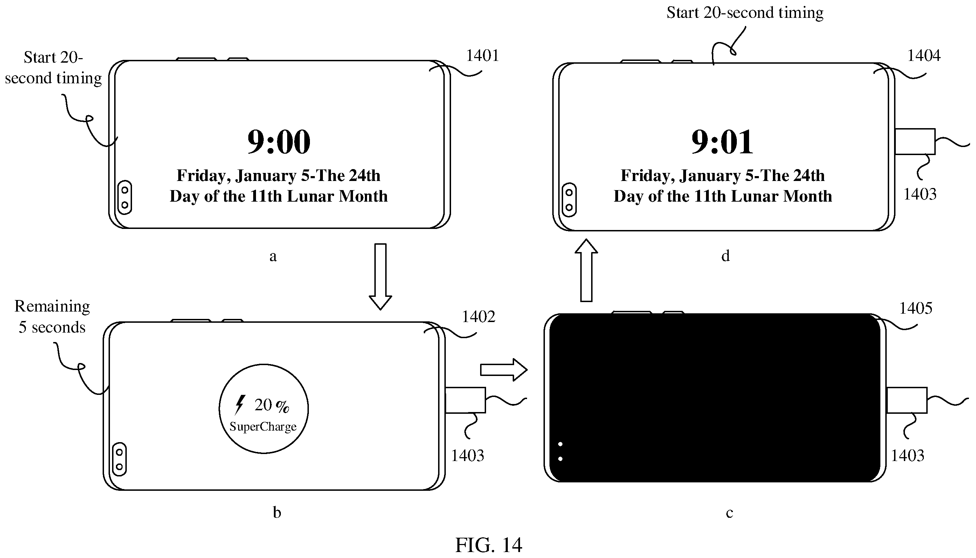

As shown in a in FIG. 14, when the display module has detected that the mobile phone is not in the state of being charged, the display module may indicate a display 1401 to display the target service interface, and start 20-second timing. When timing of the timer reaches 15 seconds, if the user connects the mobile phone to a charging cable 1403, a display 1402 of the mobile phone switches to be in a screen-on state to display a charging prompt image, as shown in b in FIG. 14. When the power manager of the mobile phone detects that the display switches to be in the screen-on state, the power manager controls the mobile phone to exit the Doze state, and further enables the mobile phone to exit Standby. After the display switches to be in the screen-on state, and the mobile phone does not receive a touch operation of the user within third preset duration (for example, 10 seconds or 30 seconds), the mobile phone performs the screen-off operation. As shown in c in FIG. 14, a display 1405 of the mobile phone is in a screen-off state.

The power manager obtains a status value from a database when detecting that the display switches to be in the screen-off state. When the power manager detects that the status value indicates that the mobile phone currently meets the condition for starting Standby, the power manager starts Standby. Standby detects that the mobile phone currently is not in the state of being charged. As shown in d in FIG. 14, a display 1404 starts the target service interface, and starts 20-second timing.

### Scenario 5:

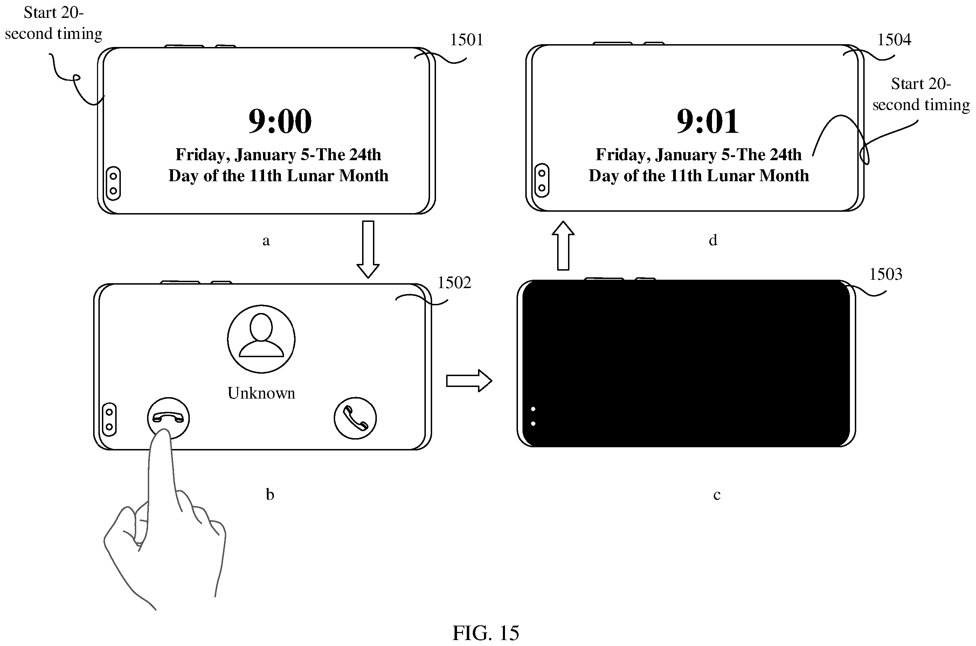

As shown in a in FIG. 15, when the display module has detected that the mobile phone is not in the state of being charged, the display module may indicate a display 1501 to display the target service interface, and start 20-second timing. When timing of the timer reaches 15 seconds (that is, when 20-second timing does not end), if the mobile phone receives an incoming call request, a display 1502 of the mobile phone switches to be in a screen-on state to display a call interface, as shown in b in FIG. 15. When the power manager of the mobile phone detects that the display switches to be in the screen-on state, the power manager controls the mobile phone to exit the Doze state, and further enables the mobile phone to exit Standby. After the user ends a call, if the mobile phone does not receive a touch operation of the user within third preset duration (for example, 10 seconds or 30 seconds), the mobile phone performs the screen-off operation. As shown in c in FIG. 15, a display 1503 of the mobile phone is in a screen-off state.

The power manager obtains a status value from a database when detecting that the display switches to be in the screen-off state. When the power manager detects that the status value indicates that the mobile phone currently meets the condition for starting Standby, the power manager starts Standby. Standby detects that the mobile phone currently is not in the state of being charged. As shown in d in FIG. 15, a display 1504 starts the target service interface, and starts 20-second timing.

### Scenario 6:

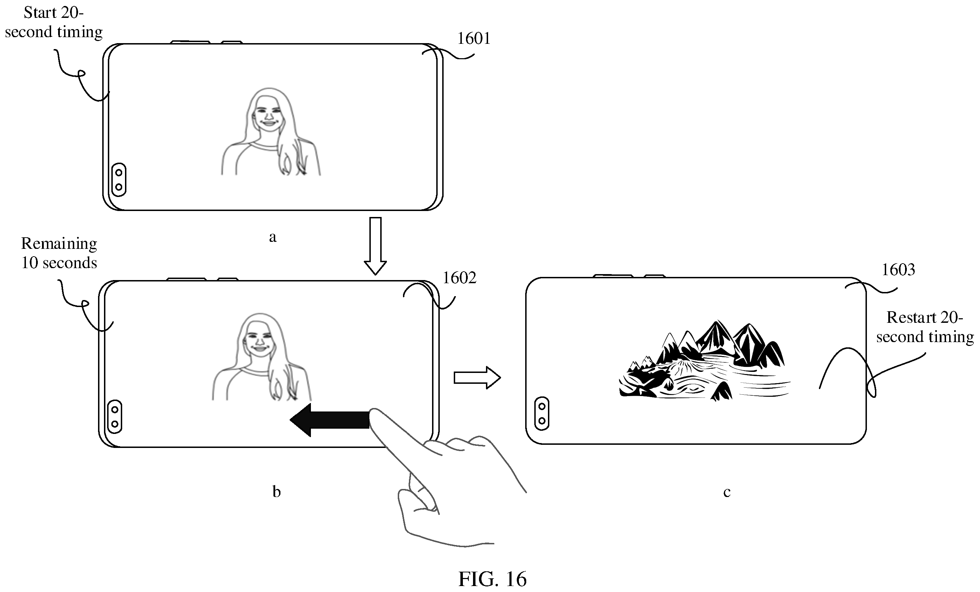

As shown in a in FIG. 16, when the display module has detected that the mobile phone is not in the state of being charged, the display module may indicate a display 1601 to display the target service interface (for example, a picture in a gallery), and start 20-second timing. When timing of the timer reaches 10 seconds (that is, when 20-second timing does not end), the mobile phone responds to a left sliding operation of the user (as shown in c in FIG. 16, a finger of the user slides along a black arrow on a display 1602) to display a next picture in the gallery on the display (a display 1603 displays the next image as shown in c in FIG. 16), and at the same time, the timer restarts 20-second timing.

### Scenario 7:

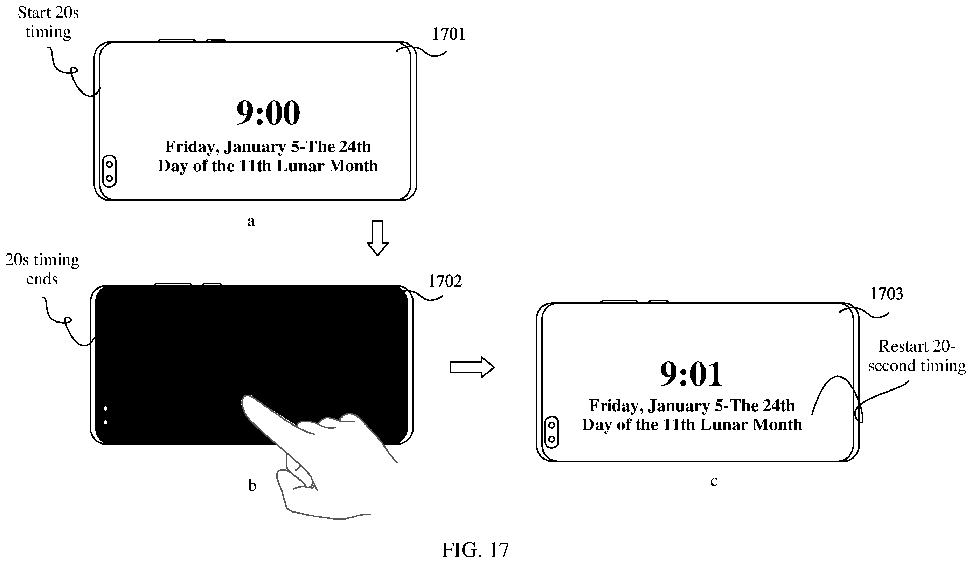

As shown in a in FIG. 17, when the display module has detected that the mobile phone is not in the state of being charged, the display module may indicate a display 1701 to display the target service interface (for example, an interface in a calendar), and start 20-second timing. In the 20-second timing process of the timer, if Standby does not detect the first preset event, the always-on operation is performed (as shown in b in FIG. 17, a display 1702 is in an Always On Display state). The mobile phone responds to an operation of tapping the display 1702, and Standby turns on a display 1703, again, and restarts 20-second timing (as shown in c in FIG. 17).

### Scenario 8:

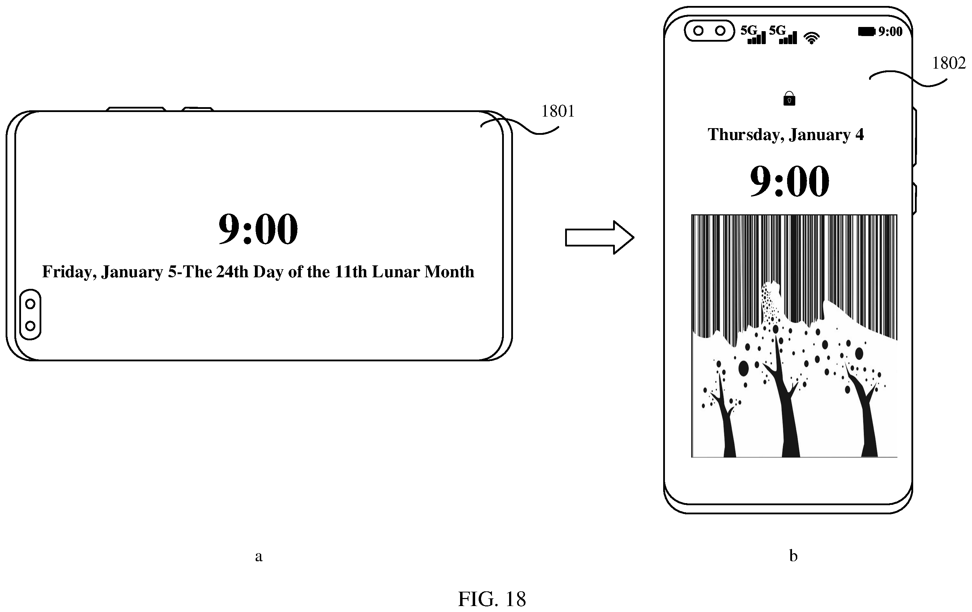

As shown in a in FIG. 18, when the display module has detected that the mobile phone is not in the state of being charged, the display module may indicate a display 1801 to display the target service interface (for example, an interface in a calendar), and start 20-second timing. In the 20-second timing process of the timer, if the user switches the screen from a stand mode to a portrait mode, a SystemServer detects that the mobile phone is not in the stand mode, and updates the status value in the database from "1" to "0". Standby detects that the status value changes from "1" to "0", and controls the display to switch to be in the screen-on state (as shown in b in FIG. 18, a display 1802 is in a screen-on and screen-locked state). When detecting that the display switches to be in the screen-on state, the power manager controls the mobile phone to exit the Doze state, that is, exit Standby.

It may be understood that, when the user switches the mobile phone from the stand mode to a non-stand mode (for example, the portrait mode), the mobile phone may exit Standby. In this manner, the user can exit Standby without performing any tapping operation. This reduces user operations, and improves user experience.

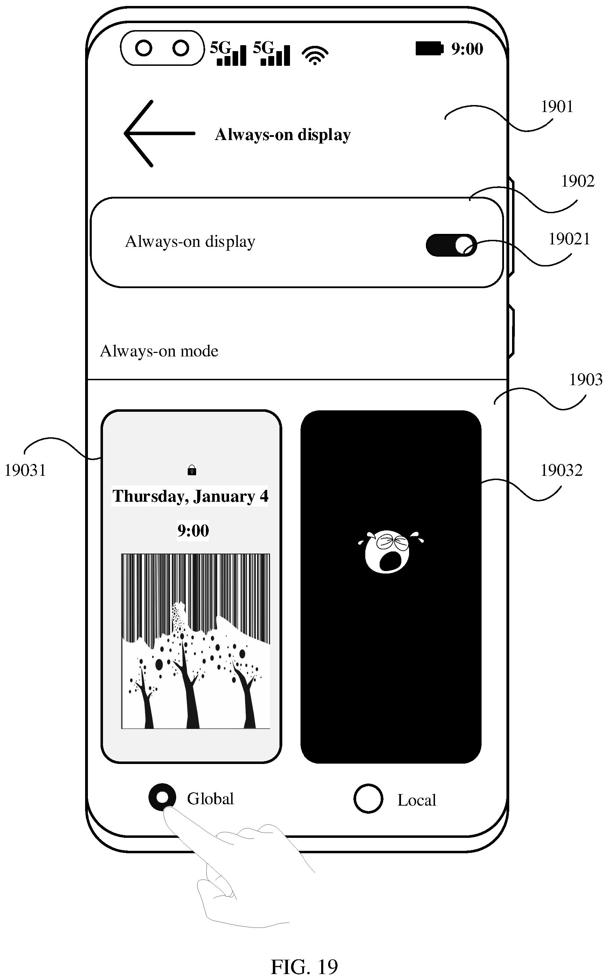

Currently, an electronic device has a plurality of display applications in a low-power state, for example, Standby and always-on display in this application. For starting and exiting Standby, refer to related descriptions in FIG. 3 to FIG. 5. The always-on display (application) includes two services: a global AOD service (namely, a first service) and a local AOD service (a second service). The user may select a service form (namely, a mode) for the always-on display based on a display requirement. FIG. 19 is an example of a setting interface of always-on display. As shown in FIG. 19, an always-on display interface 1901 includes an option 1902 for allowing or forbidding the electronic device to start always-on display. In response to an operation of turning on a switch 19021 in the option 1902 by the user, the mobile phone allows the electronic device to start the always-on display when a condition for starting the always-on display is met. The interface 1901 further includes an always-on mode option 1903. The always-on mode option 1903 includes a display style 19031 of global AOD and a display style 19032 of local AOD. The user may select an always-on mode as required. As shown in FIG. 19, in response to tapping the display style 19031 by the user, the mobile phone may record identification information of the global AOD, to indicate that the mode of the always-on display is the global AOD.

It should be noted that when the display mode of the global AOD is used for the always-on display, the mobile phone is locked and brightness of the display is dimmed, and a wallpaper displayed in the global AOD mode may be selected by the user. When the mobile phone is in the global AOD mode, the mobile phone may allow to display an image (also referred to as a layer) of another application, for example, an interface such as a notification or a navigation bar, when displaying the wallpaper of the global AOD. When the mobile phone is in the local AOD mode, the mobile phone displays an image in a preset area when the screen is locked, as shown in the display style 19032 in FIG. 19. When the mobile phone is in the local AOD mode, the mobile phone does not allow to display an image of another application on the display.

After the mobile phone starts Standby, in a process of preparing the target service interface by Standby, the image of the another application is sent to the display before the target service interface of Standby, and the display first displays the image of the another application. When receiving the target service interface, the display overwrites the image of the another application to display the target service interface. As a result, a splash-screen problem occurs when the display runs Standby. The process of preparing the target service interface by Standby includes: the application sends a to-be-drawn image to a window manager, the window manager draws the image, and transmits the drawn image to a SurfaceFlinger, and the SurfaceFligner renders the image, and sends the rendered image to the display.

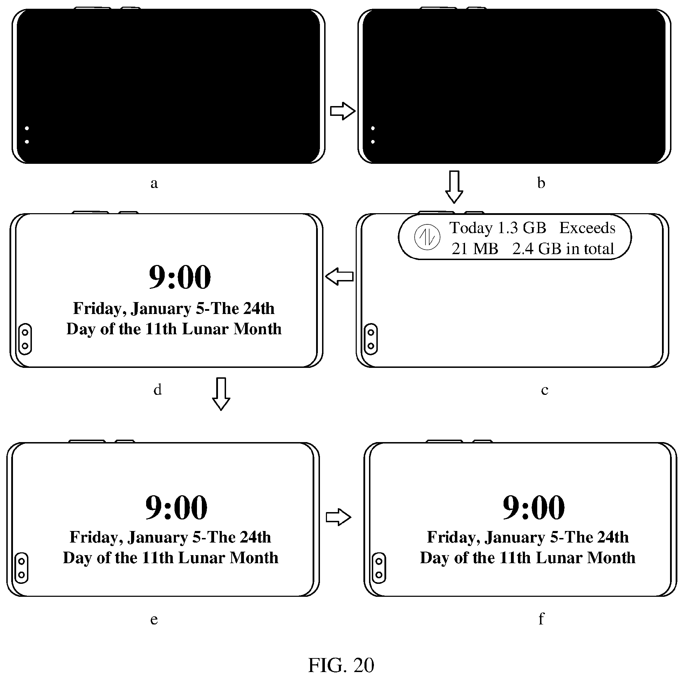

FIG. 20 is an example of a schematic diagram of a splash-screen scenario. As shown in FIG. 20, an interface a, an interface b, an interface c, an interface d, an interface e, and an interface f in FIG. 20 form a continuous picture. The interface a is a first frame of picture, the interface b is a second frame of picture, the interface c is a third frame of picture, the interface d is a fourth frame of picture, the interface e is a fifth frame of picture, and the interface f is a sixth frame of picture. The first frame of picture and the second frame of picture are lock screen interfaces of a mobile phone, and the fourth frame of picture to the sixth frame of picture all need to be calendar interfaces (namely, target service interfaces) of a Standby application, but a notification occurs on the third frame of picture, namely, the interface c. As a result, a splash screen phenomenon occurs in Standby in a process of displaying the target service interface, affecting use of the mobile phone by a user.

An embodiment of this application further provides a display method. When an electronic device starts Standby, a display status of the electronic device and fourth indication information are sent to an image composer (SurfaceFlinger). The display status is used to indicate a display mode of the electronic device in a low-power state. The display mode in the low-power state includes: Standby, global AOD, and local AOD. The fourth indication information may indicate whether the SurfaceFlinger uses a policy for filtering out an image of another application. For example, the fourth indication information may be "0", and "0" is used to indicate that the policy for filtering out the image of the another application is used. If the fourth indication information is "1", the fourth indication information is used to indicate that the policy for filtering out the image of the another application is not used. The SurfaceFlinger uses, based on the display status, a display policy corresponding to the current display status, to filter out an image that is not allowed to be displayed in the current display status. After the mobile phone exits the current display status, the SurfaceFlinger cancels the display policy corresponding to the current display status.

In this example, after the SurfaceFlinger in the electronic device filters out, based on the current display status, an image that is not allowed to be displayed, a splash-screen problem caused by displaying an image of another application on a display in a process of preparing an image in Standby or the local AOD can be avoided, and a problem of coupling between the AOD and Standby can also be avoided.

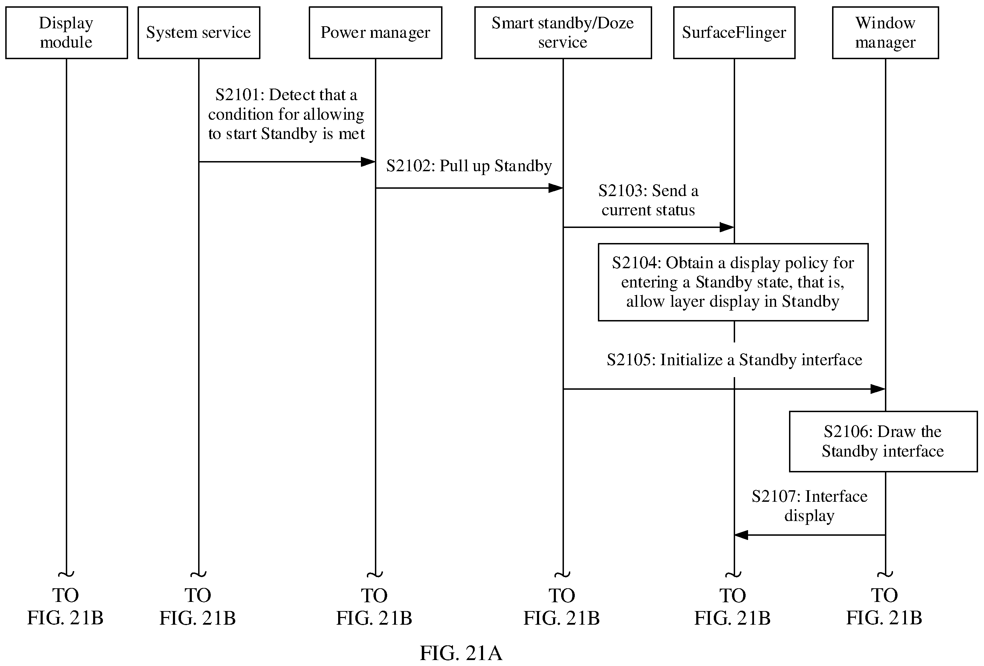

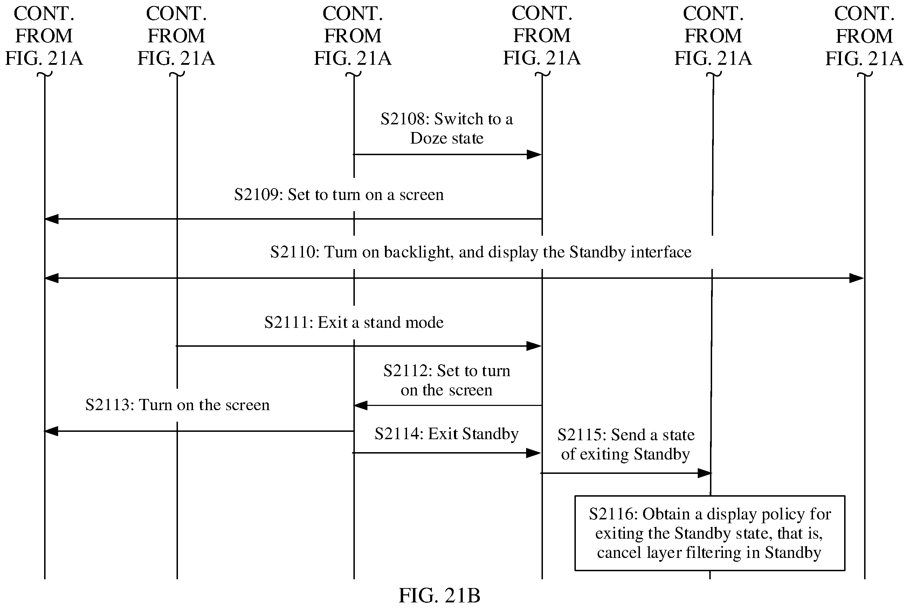

With reference to FIG. 21A and FIG. 21B, the following specifically describes a process of filtering out an image of another application in Standby in this application. In this example, an electronic device being a mobile phone is used as an example.

Step 2101: A system server detects that a condition for allowing to start Standby is met.

This step is similar to step 603. For Details, refer to related descriptions in step 603. Details are not described herein again.

Step 2102: After receiving an indication of the system server, a power manager starts Standby.

This step is similar to step 604. For Details, refer to related descriptions in step 604. Details are not described herein again.

Step 2103: Standby sends a current status to a SurfaceFlinger.

Specifically, Standby provides three low-power modes, namely, Standby, a global AOD mode, and a local AOD mode. Therefore, in a process in which the power manager starts Standby, Standby may record identification information of a low-power mode that the mobile phone currently enters. For example, in this example, when the power manager starts Standby, Standby records identification information of Standby, and the identification information may be a package name of Standby.

In a process of starting Standby, Standby may send fourth indication information and identification information of Standby to the SurfaceFlinger, and the fourth indication information is used to indicate the SurfaceFlinger to use a policy for filtering out an image that is not sent by Standby. In this example, the fourth indication information may be identified by "0".

Step 2104: The SurfaceFlinger obtains a display policy for entering a Standby state.

Specifically, after the SurfaceFlinger obtains the packet name of Standby, the SurfaceFlinger determines, based on the fourth indication information, to use the display policy for filtering out an image that is not sent by Standby. The display policy corresponds to a preset whitelist. The display policy corresponding to Standby may be allowing to display a layer that belongs to the whitelist of Standby.

Standby may obtain a target service interface, and add an image label to the target service interface, and the image label is used to indicate an application for drawing the image. For example, the target service interface is an interface of a calendar, and Standby obtains the interface of the calendar, and adds a package name of Standby to the interface as the image label. Standby sends the drawn image to a window manager, the window manager draws the image, and transfers the image to the SurfaceFlinger, and the SurfaceFlinger renders the image.

In this example, when the window manager transmits the drawn image to the SurfaceFlinger, the SurfaceFlinger, may determine, according to the determined display policy, whether to transmit the image to the display.

In an example, the electronic device may prestore a display policy corresponding to each mode (for example, Standby, a first service, and a second service) in a low-power mode. The electronic device may preset, for each mode, a whitelist of an interface that is allowed to be displayed, and the whitelist may store the package name of Standby.

For example, the SurfaceFlinger obtains the display policy corresponding to Standby. The display policy includes the whitelist of the interface allowed to be displayed in Standby mode. After receiving the image sent by the window manager for displaying, the SurfaceFlinger may detect whether the image label of the image is the same as identification information stored in the whitelist of Standby. If it is detected that the image belongs to the image in the whitelist, the SurfaceFlinger allows the image to be displayed, and the SurfaceFlinger renders the image and sends, through the window manager, the image to the display for displaying. If it is detected that the image does not belong to the whitelist, the SurfaceFlinger does not allow the image to be displayed, that is, the currently filters out the received image.

Optionally, the SurfaceFlinger may add the identification information of Standby to the whitelist, and the identification information of Standby may be the package name of Standby.

For example, after obtaining the package name of Standby, the SurfaceFlinger adds the package name of Standby to the whitelist. The SurfaceFlinger obtains the display policy corresponding to Standby. The display policy includes displaying a layer that belongs to the whitelist of Standby. After receiving the interface displayed by the window manager, the SurfaceFlinger may detect, based on the image label in the interface, whether the interface belongs to the layer in the whitelist. If detecting that the interface belongs to the layer in the whitelist, the SurfaceFlinger allows the interface to be displayed, may render the received image, and send, through the window manager, the image to the display for displaying. If detecting that the interface does not belong to the layer in the whitelist, the SurfaceFlinger does not allow the layer to be displayed, that is, filters out the currently received layer.

Step 2105: Standby indicates the window manager to initialize a Standby interface.

Specifically, Standby transmits the obtained target service interface to the window manager, and the window manager draws the interface sent by Standby.

Step 2106: The window manager draws Standby interface.

Specifically, the window manager draws Standby interface based on an indication of Standby.

Step 2107: The window manager sends the drawn interface to the SurfaceFlinger for displaying.

Specifically, after receiving the interface that is sent by Standby and that is transmitted by the window manager, the SurfaceFlinger may detect whether the interface belongs to the layer in the whitelist. If detecting that the interface belongs to the layer in the whitelist, the SurfaceFlinger allows the interface to be displayed, and may render the received image.

If detecting that the interface does not belong to the layer in the whitelist, the SurfaceFlinger does not allow the layer to be displayed, that is, filters out the currently received layer.

Step 2108: The power manager switches to be in a Doze state.

Specifically, after the power manager completes starting of Standby, the power manager indicates Standby to switch to be in the Doze state, that is, the mobile phone starts to run in the Doze state, so that the display displays Standby interface when the mobile phone is in the low-power state.

It should be noted that, after the power manager completes starting of Standby, Standby may register with a database, to monitor a change of a status value of the mobile phone stored in the database.

Step 2109: Standby indicates the power manager to turn on the display.

Specifically, after Standby switches to be in the Doze state, Standby indicates the power manager to turn on the display, that is, turn on backlight of the display.

Step 2110: Turn on the backlight of the display, and display Standby interface.

Specifically, after the backlight of the display is turned on, the display obtains, through the window manager, Standby interface on which the SurfaceFlinger completes rendering.

Step 2111: When the electronic device exits a stand mode, the system server indicates Standby that the electronic device exits the stand mode.

Specifically, when the electronic device exits the stand mode, the system server detects that the mobile phone does not meet a condition for starting Standby, and updates the status value in the database from a first value to a second value. When detecting that the status value in the database changes from the first value to the second value, Standby may indicate the power manager to control the display to switch to be in a screen-on state, that is, step 2112 is performed. In this example, the screen-on state is a state in which the display of the mobile phone displays the interface in a normal mode.

Step 2112: Standby indicates, based on the indication of the system server, the power manager to set to turn on the screen.

Step 2113: The power manager controls and indicates the display to switch to be in the screen-on state.

Step 2114: When detecting that the display switches to be in the screen-on state, the power manager ends running of Standby.

Specifically, when detecting that the display is in the screen-on state, the power manager exits the Doze state, that is, exits a Standby DreamService. The power manager exits Standby DreamService, that is, controls Standby to end running.

Step 2115: Standby sends, to the SurfaceFlinger, the status of exiting Standby.

Specifically, when Standby ends running, Standby may obtain setting information indicating whether the mobile phone is allowed to run always-on display. For example, when the user turns on the switch 19021 in FIG. 19 and the always-on mode selected by the user, the electronic device may store the setting information. The setting information may indicate whether the electronic device allows the always-on display to run and the running mode is a global mode or a local mode.

When detecting that the electronic device allows the global AOD to run, Standby determines that the SurfaceFlinger does not use a display policy for filtering out a layer sent by another application, and may send fifth indication information to the SurfaceFlinger. The fifth indication information indicates the SurfaceFlinger to use a second display policy, that is, the SurfaceFlinger transmits the received image to the display, that is, the SurfaceFlinger does not perform an image filtering operation.

When detecting that the electronic device allows the local AOD to run, Standby determines that the SurfaceFlinger uses a third display policy, and may send the fifth indication information to the SurfaceFlinger, and the fifth indication information indicates the SurfaceFlinger to use the third display policy. That is, the SurfaceFlinger transmits an image sent by the local AOD to the display, and filters out an image not sent by the local AOD.

When detecting that the electronic device does not allow always-on display to run, Standby determines that the SurfaceFlinger uses a fourth display policy, and may send the fifth indication information to the SurfaceFlinger, and the fifth indication information indicates the SurfaceFlinger to use the fourth display policy. That is, the SurfaceFlinger filters out a received image, that is, ensures that the electronic device is in a screen-off state.

Step 2116: The SurfaceFlinger obtains a display policy for exiting Standby state.

Specifically, the SurfaceFlinger obtains the current display policy based on the fifth indication information, that is, cancels the display policy for filtering out an image not sent by Standby.

After receiving the image sent by the window manager, the SurfaceFlinger may determine, according to the current display policy, whether to send the image to the display. When the SurfaceFlinger determines to use the second display policy, the SurfaceFlinger transmits the received image to the display, that is, the SurfaceFlinger does not perform the image filtering operation. When the SurfaceFlinger determines to use the third display policy, the SurfaceFlinger transmits, to the display, the image sent by the local AOD, and filters out the image that is not sent by the local AOD. When the SurfaceFlinger determines to use the fourth display policy, the SurfaceFlinger filters out the received image.

It should be noted that, in a process of running Standby by the mobile phone, when the power manager detects that the display switches to be in the screen-on state, the power manager exits the Doze state, and further ends running of Standby. The screen-on state is a state of the screen when the mobile phone runs normally after being unlocked.

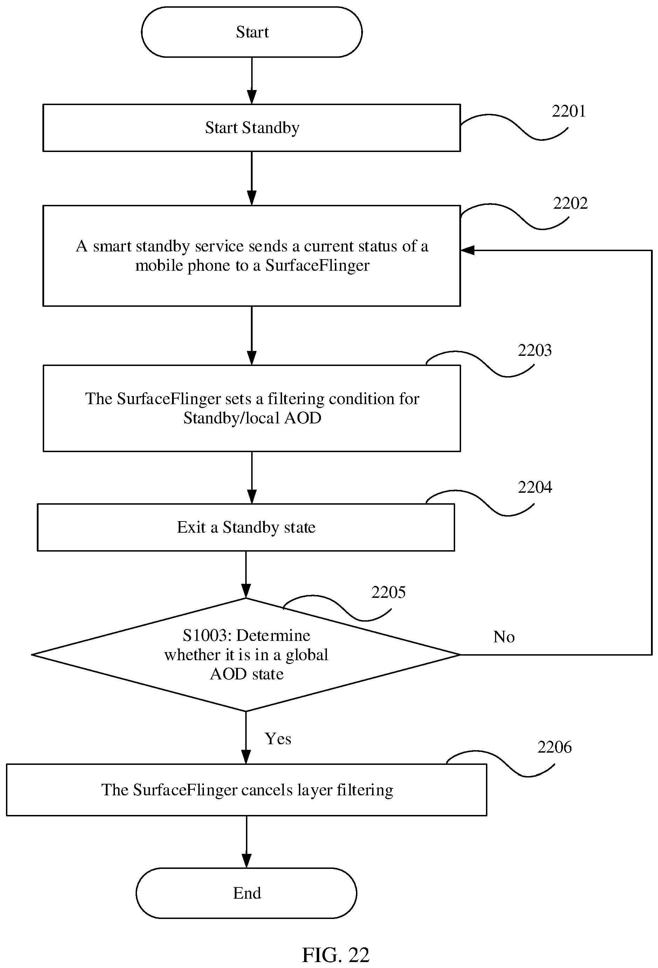

FIG. 22 is an example of a process in which an electronic device determines a display policy.

Step 2201: A mobile phone starts Standby.

For descriptions of the process, refer to descriptions in steps 2101 and 2102. Details are not described herein again.

Step 2202: Standby sends indication information to a SurfaceFlinger.

For descriptions of the process, refer to descriptions in step 2103. Details are not described herein again.

Step 2203: The SurfaceFlinger obtains a corresponding display policy based on status information.

For descriptions of the process, refer to descriptions in step 2104. Details are not described herein again.

Step 2204: A power manager ends running of Standby.

For descriptions of the process, refer to descriptions in steps 2111 and 2112. Details are not described herein again.

Step 2205: After detecting that running of Standby ends, Standby determines whether the mobile phone is currently in a global AOD state; and if Standby determines that the mobile phone is currently in the global AOD state, step 2206 is performed; or if Standby determines that the mobile phone is not currently in the global AOD state, 2202 is performed.

Specifically, after Standby detects that running of Standby ends, Standby may obtain setting information of the electronic device. When the setting information indicates the electronic device to run local AOD or disable an always-on display application, Standby performs step 2202, that is, Standby generates fifth indication information based on the setting information, and sends the fifth indication information to the SurfaceFlinger. For a specific process, refer to related descriptions in step 2115.

Optionally, the SurfaceFlinger may directly obtain the current display policy based on the fifth indication information, and determine, based on the determined display policy, whether to transmit a received image to a display.

When the electronic device runs the local AOD, the SurfaceFlinger determines to use a third display policy. When receiving the image, the SurfaceFlinger transmits the image sent by the local AOD to the display, and filters out an image not sent by the AOD.

When the electronic device is in a screen-off state, the SurfaceFlinger determines to use a fourth display policy, and the SurfaceFlinger filters out the received image when receiving the image.

Step 2206: The SurfaceFlinger cancels layer filtering.

Specifically, when the electronic device runs global AOD, the SurfaceFlinger determines to use a second display policy, that is, the SurfaceFlinger transmits the received image to the display, that is, the SurfaceFlinger does not perform an image filtering operation.

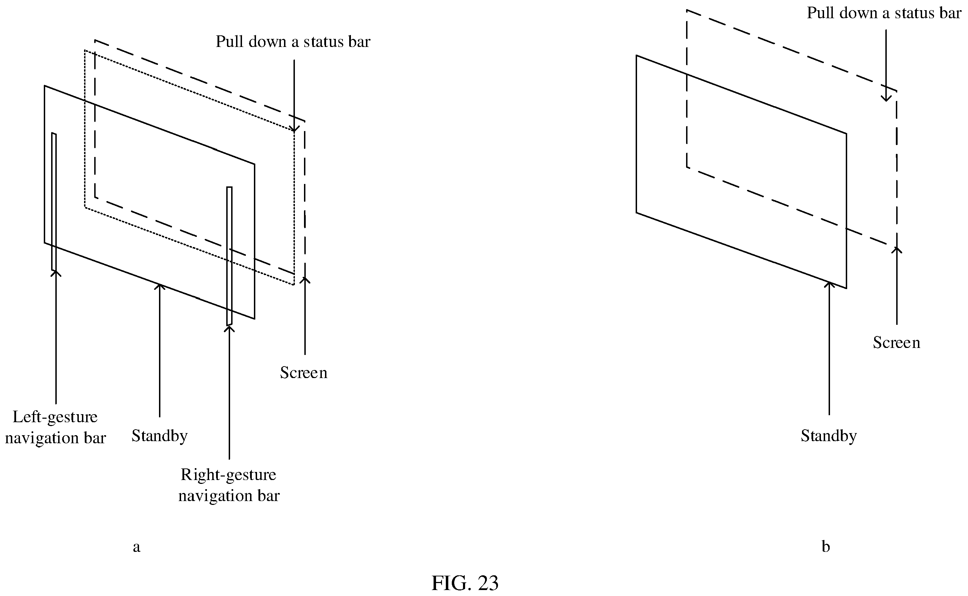

FIG. 23 is an example of a schematic diagram of a layer displayed on a display when a mobile phone is in a Standby state.

As shown in a in FIG. 23, assuming that the mobile phone is in Standby state, it is the schematic diagram of the layer displayed on the display when a display manner in this application is not used. As shown in a, after the mobile phone starts Standby, in a process of preparing the target service interface by Standby, the image of the another application is sent to the display before the target service interface of Standby, and the display first displays the image of the another application (for example, a left-hand-gesture navigation bar, and a right-hand-gesture navigation bar). When the display receives a Standby interface, Standby interface is displayed.

As shown in b in FIG. 23, assuming that the mobile phone is in Standby state, the display manner in this application is used. After the mobile phone starts Standby, in a process of preparing the target service interface by Standby, the SurfaceFlinger detects that the image of the another application is not an image in a whitelist of Standby and does not allow to display the layer.

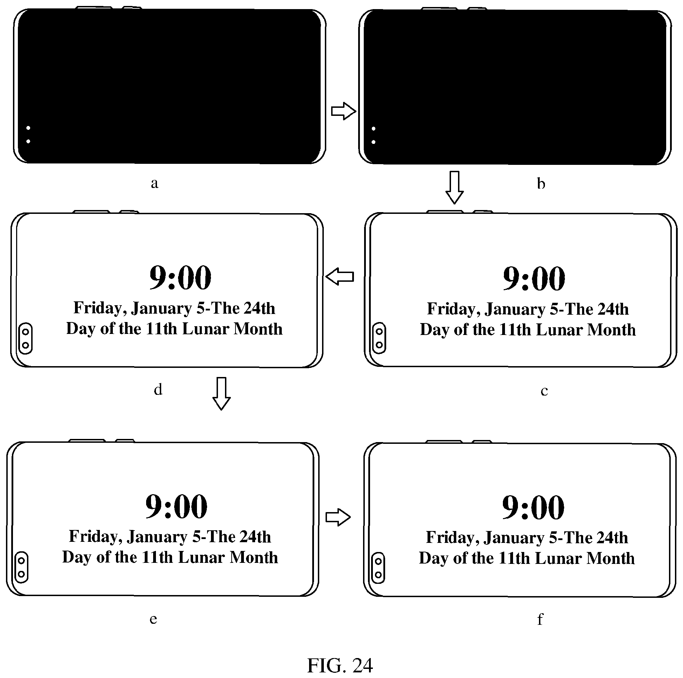

FIG. 24 is an example of a schematic diagram of a scenario in which a display manner in this application is used. As shown in FIG. 24, an interface a, an interface b, an interface c, an interface d, an interface e, and an interface f in FIG. 24 form a continuous picture. The interface a is a first frame of picture, the interface b is a second frame of picture, the interface c is a third frame of picture, the interface d is a fourth frame of picture, the interface e is a fifth frame of picture, and the interface f is a sixth frame of picture. The first frame of picture and the second frame of picture are lock screen interfaces of a mobile phone, the third frame of picture to the sixth frame of picture all need to be calendar interfaces (namely, target service interfaces) of a Standby application, and no splash screen phenomenon occurs.

It may be understood that, to implement the foregoing functions, the electronic device includes corresponding hardware and/or software modules for performing the functions. With reference to algorithm steps of the examples described in the embodiments disclosed in this specification, this application can be implemented in a form of hardware or a combination of hardware and computer software. Whether a specific function is performed by hardware or hardware driven by computer software depends on a particular application and a design constraint of the technical solutions. A person of skill in the art may use different methods to implement the described functions with reference to the embodiments for each particular application, but it should not be considered that the implementation goes beyond the scope of this application.

An embodiment of this application further provides a chip system. The chip system includes at least one processor and at least one interface circuit. The processor is connected to the interface circuit through a line. For example, the interface circuit may be configured to receive a signal from another apparatus (for example, a storage of an electronic device). For another example, the interface circuit may be configured to transmit a signal to another apparatus (for example, a processor). For example, the interface circuit may read instructions stored in the memory and send the instructions to the processor. When the instructions are executed by the processor, the electronic device may be enabled to perform the steps in the foregoing embodiments. It is clear that the chip system may further include another discrete device. This is not specifically limited in this embodiment of this application.

An embodiment further provides a computer storage medium. The computer storage medium stores computer instructions. When the computer instructions are run on an electronic device, the electronic device is enabled to perform the foregoing related method steps to implement the display method in the foregoing embodiments. The storage medium includes: any medium that can store program code, such as a USB flash drive, a removable hard disk, a read-only memory (read-only memory, ROM), a random access memory (random access memory, RAM), a magnetic disk, or an optical disc.

An embodiment further provides a computer program product. When the computer program product is run on a computer, the computer is enabled to perform the related steps to implement the display method in the foregoing embodiments.

The electronic device, the computer storage medium, the computer program product, or the chip provided in this embodiment is configured to perform the corresponding display method provided above. Therefore, for beneficial effect that can be achieved, refer to the beneficial effect of the corresponding method provided above. Details are not described herein again.

Any content of the embodiments of this application and any content of a same embodiment may be freely combined. Any combination of the foregoing content falls within the scope of this application.

Embodiments of this application are described above with reference to the accompanying drawings. However, this application is not limited to the foregoing specific implementations. The foregoing specific implementations are merely examples, but are not limitative. Under the enlightenment of this application, a person of ordinary skill in the art may further make many forms without departing from the purpose of this application and the protection scope of the claims, and all the forms fall within the protection of this application.

## Claims

1. A display method, applied to an electronic device, wherein a first application is installed in the electronic device, and the first application inherits a low-power mode; and the method comprises:
starting the first application when the electronic device is in a stand mode;
determining, by the first application based on a service interface displayed previously on a display controlled by the first application, a target service interface to be displayed currently on the display controlled by the first application, wherein the service interface used when the first application runs for the first time is determined based on a service interface recommendation model; and
when it is detected that the electronic device is in a state of being charged, controlling, by the first application in a charging period of the electronic device, the display to display the target service interface; or
when it is detected that the electronic device is not in a state of being charged, controlling, by the first application within first preset duration, the display to display the target service interface.

2. The method according to claim 1, wherein the first application comprises: a status management module, a display module, and a timer; and
when it is detected that the electronic device is not in a state of being charged, the controlling, by the first application within first preset duration, the display to display the target service interface comprises:
when it is detected that the electronic device is not in the state of being charged, controlling, by the display module, the display to display the target service interface, and starting the timer;
when it is detected that the timer reaches the first preset duration, transmitting, by the display module, first indication information to the status management module; and
setting, by the status management module based on the first indication information, the display to switch to be in an Always On Display state.

3. The method according to claim 2, wherein after the display switches to be in the Always On Display state, the method further comprises:
when detecting a first preset event, transmitting, by the display module, second indication information to the status management module, wherein the first preset event comprises a preset touch operation or an event in which a human eye gazes at the display;
setting, by the status management module, the display to turn on a screen based on the second indication information; and
indicating, by the display module, the timer to restart timing.

4. The method according to claim 2, wherein the method further comprises:
within the first preset duration, when the display module detects a first preset event, indicating the timer to restart timing, wherein the first preset event comprises a preset touch operation or an event in which a human eye gazes at the display.

5. The method according to claim 2, wherein the method further comprises:
within the first preset duration, when the display module detects a first preset event, increasing a timing threshold of the timer currently by second preset duration, wherein the first preset event comprises a preset touch operation or an event in which a human eye gazes at the display.

6. The method according to claim 2, wherein the electronic device comprises a power manager; and the method further comprises:
when it is detected that the electronic device switches to be in a screen-on state, controlling, by the power manager, the first application to end running, wherein brightness of the display in the screen-on state is greater than brightness when the first application controls the display to display the target service interface.

7. The method according to claim 6, wherein the method further comprises:
switching, by the electronic device, to be in the screen-on state in response to an operation of connecting the electronic device to a charger or an operation of disconnecting the electronic device from the charger.

8. The method according to claim 6, wherein the method further comprises:
switching, by the electronic device, to be in the screen-on state in response to an operation, of pressing a power button, that is input by a user.

9. The method according to claim 2, wherein when it is detected that the electronic device is in a state of being charged, before the controlling, by the first application in a charging period of the electronic device, the display to display the target service interface, the method comprises:
detecting, by the display module, whether a first service function in the first application is started, wherein the first service function is used to indicate the electronic device to allow the first application to control, in the charging period, the display to display the target service interface; and
detecting, by the display module, that the first service function has been started.

10. The method according to any one of claims 1 to 9, wherein before the starting the first application, the method further comprises:
when a system server of the electronic device detects that the electronic device is in the stand mode, detecting, by the system server, whether a status value of the electronic device is a first value, wherein the status value is used to indicate whether the electronic device meets a condition for allowing to start the first application; and
when the system server detects that the status value is the first value, transmitting third indication information to the power manager of the electronic device, to indicate the power manager to start the first application; and
the starting the first application comprises:
starting, by the power manager, the first application based on the third indication information.

11. The method according to claim 10, wherein the method further comprises:
registering the system server when the electronic device is powered on;
monitoring, by the system server, a status of each to-be-monitored item; and
determining, by the system server, the status value of the electronic device based on the status of each to-be-monitored item, and storing the status value.

12. The method according to claim 11, wherein the starting the first application comprises:
when the power manager detects that the electronic device switches to be in a screen-off state, detecting whether the status value of the electronic device is the first value; and
starting the first application when the power manager detects that the status value of the electronic device is the first value.

13. The method according to claim 11, wherein the method further comprises:
obtaining, by the system server, a preset monitoring item;
obtaining, by the system server, a service item supported by the electronic device; and
obtaining, by the system server, an intersection item between the preset monitoring item and the service item supported by the electronic device, and using the intersection item as the to-be-monitored item.

14. The method according to claim 13, wherein the preset monitoring item comprises: whether an account for logging in to the electronic device is an account of a primary user, whether the electronic device allows the first application to run, whether the electronic device disables a service at a privacy moment, whether the electronic device is in the stand mode, whether the electronic device is in an unlocked state, whether the electronic device is not in a call state, whether the electronic device is not remotely locked, whether the electronic device is not in a setup wizard state, whether the electronic device is not in a leather case mode, whether the electronic device is not in a virtual reality VR mode, and whether the electronic device is not in a power-saving mode.

15. The method according to claim 14, wherein if the service item supported by the electronic device comprises the preset monitoring item,
the determining, by the system server, the status value of the electronic device based on the status of each to-be-monitored item comprises:
when the system server detects that the account for logging in to the electronic device is the account of the primary user, the electronic device allows the first application to run, the electronic device disables the service at the privacy moment, the electronic device is in the stand mode, the electronic device is in the unlocked state, the electronic device is not in the call state, the electronic device is not remotely locked, the electronic device is not in the setup wizard state, the electronic device is not in the leather case mode, the electronic device is not in the VR mode, and the electronic device is not in the power-saving mode, determining that the status value of the electronic device is the first value.

16. The method according to claim 1, wherein when it is detected that the electronic device is not in the state of being charged, the controlling, by the display module, the display to display the target service interface comprises:
when the first application is started, sending first information of the electronic device to an image composer of the electronic device, wherein the first information comprises fourth indication information and first identification information of the first application, and the fourth indication information is used to indicate the image composer to obtain a first display policy;
determining, by the image composer based on the first information, that the image composer uses the first display policy;
when receiving a to-be-displayed first image, detecting, by the image composer according to the first display policy, whether the first image belongs to an image sent by the first application; and
when detecting that the first image belongs to the image sent by the first application, transmitting, by the image composer, the first image to the display, so that the display displays the first image; or
when detecting that the first image does not belong to the image sent by the first application, filtering, by the image composer, the first image.

17. The method according to claim 16, wherein the determining, by the image composer based on the first information, that the image composer uses the first display policy comprises:
obtaining, by the image composer, a first preset list based on the fourth indication information; and
adding, by the image composer, the first identification information to the first preset list, wherein
the first display policy is used to indicate the image composer to allow an image belonging to the first preset list to be transmitted to the display.

18. The method according to claim 17, wherein the detecting, by the image composer according to the first display policy, whether the first image belongs to an image sent by the first application comprises:
obtaining, by the image composer, an image label of the first image as a first label, wherein the first label is identification information of an application that generates the first image;
detecting, by the image composer, whether there is identification information that is the same as the first label in the first preset list; and
when detecting that there is the identification information that is the same as the first label in the first preset list, determining, by the image composer, that the first image belongs to the image sent by the first application; or
when detecting that there is no identification information that is the same as the first label in the first preset list, determining, by the image composer, that the first image does not belong to the image sent by the first application.

19. The method according to claim 17, wherein the method further comprises:
when the first application ends running, obtaining setting information of the electronic device, wherein the setting information is used to indicate information about a service that is allowed to be started when the electronic device is in a low-power state;
sending, by the first application, fifth indication information to the image composer based on the setting information;
obtaining, by the image composer based on the fifth indication information, a display policy used by the image composer; and
when receiving a second image, determining, by the image composer according to the currently determined display policy, whether to transmit the second image to the display.

20. The method according to claim 19, wherein the sending, by the first application, fifth indication information to the image composer based on the setting information comprises:
generating, by the first application, the fifth indication information when detecting that the setting information indicates that the service that is allowed to be run when the electronic device in the low-power state is a first service, wherein the fifth indication information indicates the image composer to use a second display policy, and the second display policy is used to indicate the image composer to send the received image to the display; and
when receiving a second image, the determining, by the image composer according to the currently determined display policy, whether to transmit the second image to the display comprises:
when receiving the second image, sending, by the image composer, the second image to the display based on an indication of the second display policy.

21. The method according to claim 19, wherein the sending, by the first application, fifth indication information to the image composer based on the setting information comprises:
generating, by the first application, the fifth indication information when detecting that the setting information indicates that the service allowed to be started when the electronic device is in the low-power state is a second service, wherein the fifth indication information indicates the image composer to use a third display policy, and the third display policy indicates the image composer to allow an image sent by the second service to be transmitted to the display; and
when receiving a second image, the determining, by the image composer according to the currently determined display policy, whether to transmit the second image to the display comprises:
when receiving the second image, detecting, by the image composer according to the third display policy, whether the second image belongs to the image sent by the second service; and
when detecting that the second image belongs to the image sent by the second service, transmitting, by the image composer, the second image to the display, so that the display displays the second image; or
when detecting that the second image does not belong to the image sent by the second service, filtering, by the image composer, the second image.

22. The method according to claim 19, wherein the sending, by the first application, fifth indication information to the image composer based on the setting information comprises:
generating, by the first application, the fifth indication information when detecting that the setting information indicates the electronic device to run a screen-off service in the low-power state, wherein the fifth indication information indicates the image composer to use a fourth display policy, and the fourth display policy indicates the image composer to forbid transmission of the received image to the display; and
when receiving a second image, the determining, by the image composer according to the currently determined display policy, whether to transmit the second image to the display comprises:
when receiving the second image, filtering, by the image composer, the second image based on an indication of the fourth display policy.

23. The method according to claim 19, wherein the service that is allowed to be started when the electronic device is in the low-power state comprises a first service, a second service, and a screen-off service; and
when the first service is started, controlling, by the first service, the display to display a first preset image when the electronic device is in a screen-locked state, wherein brightness of the display when the first preset image is displayed is less than first brightness, and the first brightness is brightness of the display when the electronic device is in a normal running state; and
when the second service is started, controlling, by the second service when the electronic device is in the screen-locked state, to display a second preset image in a first area of the display, wherein the first display area is less than an area of the display, and brightness of the display when the second preset image is displayed is less than the first brightness.

24. A chip system, comprising a processor, configured to invoke a computer program from a memory and run the computer program, to enable an electronic device in which the chip system is installed to perform the display method according to any one of claims 1 to 23.

25. An electronic device, comprising:
a memory and a processor, wherein the memory is coupled to the processor; and
the memory stores program instructions, and when the program instructions are executed by the processor, the electronic device is enabled to perform the display method according to any one of claims 1 to 23.

26. A computer-readable storage medium, comprising a computer program, wherein when the computer program is run on an electronic device, the electronic device is enabled to perform the display method according to any one of claims 1 to 23.
